# FASCICULE DE BREVET EUROPEEN

(11) **EP 1 893 681 B1**
(45) Date de publication et mention de la délivrance du brevet: **16.09.2009**
(21) Numéro de dépôt: 06742878.9
(22) Date de dépôt: 11.05.2006
(51) Int. Cl.: C08K 5/54, B60C 1/00

(54) **COMPOSTION DE CAUTCHOUC POUR PNEUMATIQUE COMPORTANT UN AGENT DE COUPLAGE ORGANOSILICIQUE ET UN AGENT DE RECOUVREMENT DE CHARGE INORGANIQUE**
KAUTSCHUKZUSAMMENSETZUNG FÜR REIFEN, ENTHALTEND EINEN ORGANOSILICIUM-HAFTVERMITTLER UND EIN ABDECKMITTEL FÜR ANORGANISCHEN FÜLLSTOFF
RUBBER COMPOSITION FOR TYRE COMPRISING AN ORGANOSILICIUM COUPLING AGENT AND AN INORGANIC FILLER COVERING AGENT

(30) Priorité: 26.05.2005 FR 0505517
(43) Date de publication de la demande: 05.03.2008
(73) Titulaire: Société de Technologie Michelin, 63000 Clermont-Ferrand (FR); Michelin Recherche et Technique S.A., 1763 Granges-Paccot (CH)
(72) Inventeur: ARAUJO DA SILVA, José, Carlos, F-63430 Pont-du-Chateau (FR); BINDE, Nathalie, F-63000 Clermont-Ferrand (FR); ROBERT, Pierre, F-63000 Clermont-Ferrand (FR); STERIN, Sébastien, F-69450 St-Cyr au Mont d'Or (FR); VEYLAND, Anne, F-63200 Marsat (FR)
(74) Mandataire: Ribière, Joel
(86) Numéro de dépôt international: PCT/EP2006/004436
(87) Numéro de publication internationale: WO 2006/125533

(56) Documents cités:
- EP-A- 0 581 618
- WO-A-20/04056918
- FR-A- 2 803 300
- US-A- 4 118 367

## Description

La présente invention est relative aux compositions d'élastomères diéniques renforcées d'une charge inorganique telle que silice, destinées à la fabrication de pneumatiques ou de produits semi-finis pour pneumatiques, en particulier aux bandes de roulement de ces pneumatiques.

Elle se rapporte plus particulièrement aux agents de couplage destinés à assurer la liaison, dans de telles compositions, entre ces élastomères diéniques et ces charges inorganiques renforçantes.

De façon à réduire la consommation de carburant et les nuisances émises par les véhicules à moteur, des efforts importants ont été réalisés par les concepteurs de pneumatiques afin d'obtenir des pneumatiques présentant à la fois une très faible résistance au roulement, une adhérence améliorée tant sur sol sec que sur sol humide ou enneigé, ainsi qu'une bonne résistance à l'usure.

Ceci a été rendu possible notamment grâce à la mise au point de nouvelles compositions d'élastomères renforcées de charges inorganiques spécifiques qualifiées de "renforçantes", présentant une haute dispersibilité, capables de rivaliser avec le noir de carbone conventionnel du point de vue renforçant, et offrant en outre à ces compositions une hystérèse réduite synonyme d'une plus basse résistance au roulement pour les pneumatiques les comportant. De telles compositions de caoutchouc, comportant des charges inorganiques renforçantes par exemple du type silices ou alumines, ont par exemple été décrites dans les brevets ou demandes de brevet EP 501 227 ou US 5 227 425, EP 735 088 ou US 5 852 099, EP 810 258 ou US 5 900 449, EP 881 252, WO99/02590, WO99/06480, WO00/05300, WO00/05301, WO02/10269.

La mise en oeuvre (ou "processabilité") des compositions de caoutchouc contenant de telles charges reste néanmoins plus difficile que pour les compositions de caoutchouc chargées conventionnellement de noir de carbone. En particulier, il est nécessaire d'utiliser un agent de couplage, encore appelé agent de liaison, qui a pour fonction d'assurer la connexion entre la surface des particules de charge inorganique et l'élastomère, tout en facilitant la dispersion de cette charge inorganique au sein de la matrice élastomérique.

Par agent de "couplage" (charge inorganique/élastomère), on rappelle ici que doit être entendu, de manière connue, un agent apte à établir une connexion suffisante, de nature chimique et/ou physique, entre la charge inorganique et l'élastomère diénique.

Un tel agent de couplage, au moins bifonctionnel, a comme formule générale simplifiée « Y-W- X », dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice) ;
- X représente un groupe fonctionnel (fonction "X") capable de se lier physiquement et/ou chimiquement à l'élastomère diénique, par exemple par l'intermédiaire d'un atome de soufre ;
- W représente un groupe divalent permettant de relier "Y" et "X".
Les agents de couplage ne doivent en particulier pas être confondus avec de simples agents de recouvrement de la charge inorganique qui, de manière connue, peuvent comporter la fonction "Y" active vis-à-vis de la charge inorganique mais sont en tout cas dépourvus de la fonction "X" active vis-à-vis de l'élastomère diénique.

Des agents de couplage, notamment (silice/ élastomère diénique), ont été décrits dans un grand nombre de documents brevet, les plus connus étant des silanes sulfurés bifonctionnels, en particulier des alkoxysilanes, considérés aujourd'hui comme les produits apportant, pour des vulcanisats chargés à la silice, le meilleur compromis en terme de sécurité au grillage, de facilité de mise en oeuvre et de pouvoir renforçant. Parmi ces silanes sulfurés, doit être cité tout particulièrement le tétrasulfure de bis 3-triéthoxysilylpropyle (en abrégé TESPT), agent de couplage de référence dans les pneumatiques à basse résistance au roulement qualifiés de "Pneus Verts" pour l'économie d'énergie offerte (concept "*Energy-saving Green Tyres*").

On cherche toujours aujourd'hui à améliorer les performances de ces agents de couplage pour charge inorganique telle que silice.

Le besoin est particulièrement présent dans le cas de matrices de caoutchouc à base d'un élastomère isoprénique telles que celles utilisées dans les bandes de roulement de pneumatiques Poids-lourd, dans lesquelles, de manière connue, une liaison efficace avec l'élastomère est beaucoup plus difficile à obtenir comparativement à l'emploi de noir de carbone.

Ainsi, si l'on sait certes réduire l'hystérèse et donc la résistance au roulement de pneumatiques à base de caoutchouc naturel en remplaçant le noir de carbone par une charge inorganique telle que de la silice, ceci se fait malheureusement au détriment du renforcement de la matrice de caoutchouc, au bout du compte de la résistance à l'usure desdits pneumatiques. Tant et si bien que les silices sont encore peu utilisées dans les matrices d'élastomère isoprénique, comparativement au noir de carbone.

Or, les Demanderesses ont découvert un nouveau système de couplage charge inorganique/ élastomère isoprénique qui permet de réconcilier, même dans des matrices de caoutchouc naturel telles que celles utilisées dans les bandes de roulement de pneumatiques Poids-lourd, les deux objectifs contradictoires que sont résistance au roulement et résistance à l'usure.

En conséquence, un premier objet de l'invention concerne une composition de caoutchouc destinée à la fabrication de pneumatiques, à base d'au moins un élastomère isoprénique, une charge inorganique à titre de charge renforçante, un système de couplage assurant la liaison entre ladite charge inorganique renforçante et l'élastomère isoprénique, ladite composition étant **caractérisée en ce que** ledit système de couplage comporte en combinaison:
■ un agent de recouvrement capable de se lier aux sites fonctionnels de surface de la charge inorganique (ci-après "Composé I") ; et
■ à titre d'agent de couplage, un composé organosilicié (ci-après "Composé II") au moins bifonctionnel greffable d'une part sur la charge inorganique au moyen d'un groupe fonctionnel silylé G, d'autre part sur l'élastomère au moyen d'un groupe fonctionnel azo-dicarbonyle, ledit composé organosilicié ayant pour formule :

   A-CO-N=N-CO-Z-G

   dans laquelle:
   - G est le groupe fonctionnel silylé, porteur d'un groupe hydroxyle ou hydrolysable fixé sur un atome de silicium du composé ;
   - Z est un groupe de liaison divalent reliant le groupe fonctionnel azo-dicarbonyle au groupe fonctionnel silylé ;
   - A représente un groupe hydrocarboné monovalent ou le groupement de formule Z'-G' dans laquelle :
      ○ Z', identique à ou différent de Z, est un groupe de liaison divalent permettant de relier le groupe fonctionnel azo-dicarbonyle à un autre groupe fonctionnel silylé G' ;
      ○ G', identique à ou différent de G, est un groupe fonctionnel silylé porteur d'un autre groupe hydroxyle ou hydrolysable fixé sur un atome de silicium ;
   - A, Z et le cas échéant Z' pouvant comporter, indépendamment, un hétéroatome.

Le Composé I est de préférence choisi dans le groupe constitué par les silanes hydroxylés ou hydrolysables, les polyols, les polyéthers, les amines, les polysiloxanes hydroxylés ou hydrolysables, et les mélanges de tels composés.

Un tel système de couplage permet :
- non seulement d'abaisser encore, et de manière notable, comparativement à un agent de couplage conventionnel du type silane sulfuré, l'hystérèse des compositions de caoutchouc, par voie de conséquence la résistance au roulement des pneumatiques et la consommation d'énergie des véhicules automobiles équipés de tels pneumatiques ;
- mais encore d'atteindre un niveau de renforcement, et donc de résistance à l'usure, au moins égal à celui disponible avec du noir de carbone.

L'invention a également pour objet un procédé pour préparer une composition de caoutchouc destinée à la fabrication de pneumatiques, présentant une hystérèse et un renforcement améliorés, cette composition étant à base d'un élastomère isoprénique, d'une charge inorganique renforçante et d'un système de couplage, ledit procédé comportant les étapes suivantes :
- incorporer à un élastomère isoprénique, au cours d'une première étape dite "non-productive", au moins une charge inorganique renforçante et tout ou une première partie d'un système de couplage assurant la liaison entre ladite charge inorganique renforçante et l'élastomère isoprénique, en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite, au cours d'une seconde étape dite "productive", le cas échéant la seconde partie du système de couplage, puis un système de réticulation (ou vulcanisation) ;
- malaxer le tout jusqu'à une température maximale inférieure à 120°C,
et étant caractérisé en ce ledit système de couplage comporte les Composés I et II ci-dessus.

L'invention a également pour objet l'utilisation d'une composition selon l'invention pour la fabrication de pneumatiques ou de produits semi-finis en caoutchouc destinés à ces pneumatiques, ces produits semi-finis étant notamment choisis dans le groupe constitué par les bandes de roulement, les nappes d'armature de sommet, les flancs, les nappes d'armature de carcasse, les bourrelets, les protecteurs, les sous-couches, les blocs de caoutchouc et autres gommes internes, notamment les gommes de découplage, destinés à assurer la liaison ou l'interface entre les zones précitées des pneumatiques.

L'invention a également pour objet ces pneumatiques et ces produits semi-finis eux-mêmes, lorsqu'ils comportent une composition de caoutchouc conforme à l'invention. L'invention concerne en particulier les bandes de roulement de pneumatiques, ces bandes de roulement pouvant être utilisées lors de la fabrication de pneumatiques neufs ou pour le rechapage de pneumatiques usagés ; grâce aux compositions de l'invention, ces bandes de roulement présentent à la fois une résistance élevée à l'usure et une résistance au roulement réduite.

La composition conforme à l'invention est particulièrement adaptée à la fabrication de pneumatiques ou de bandes de roulement de pneumatiques destinés à équiper des véhicules de tourisme, camionnettes, véhicules 4x4 (à 4 roues motrices), deux roues, "Poids-lourd" - c'est-à-dire métro, bus, engins de transport routier (camions, tracteurs, remorques), véhicules hors-la-route) -, avions, engins de génie civil, agraire, ou de manutention.

L'invention ainsi que ses avantages seront aisément compris à la lumière de la description et des exemples de réalisation qui suivent.

### I. MESURES ET TESTS UTILISES

Les compositions de caoutchouc sont caractérisées, avant et après cuisson, comme indiqué ci-après.

### I-1. Rhéométrie:

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : Ti est le délai d'induction, c'est-à-dire le temps nécessaire au début de la réaction de vulcanisation ; T_{α} (par exemple T₉₉) est le temps nécessaire pour atteindre une conversion de α%, c'est-à-dire α% (par exemple 99%) de l'écart entre les couples minimum et maximum. On mesure également la constante de vitesse de conversion notée K (exprimée en min⁻¹), d'ordre 1, calculée entre 30% et 80% de conversion, qui permet d'apprécier la cinétique de vulcanisation.

### I-2. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants nominaux (ou contraintes apparentes, en MPa) à 10% d'allongement (notés M10), 100% d'allongement (M100) et 300% d'allongement (M300). On mesure également les contraintes à la rupture (en MPa) et les allongements à la rupture (en %).

### I-3. Propriétés dynamiques

Les propriétés dynamiques ΔG* et tan(δ)ₘₐₓ sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, à 60°C. On effectue un balayage en amplitude de déformation de 0,1 à 50% (cycle aller), puis de 50% à 1% (cycle retour). Les résultats exploités sont le module complexe de cisaillement dynamique (G*) et le facteur de perte tan δ. Pour le cycle retour, on indique la valeur maximale de tan δ observée (tan(δ)ₘₐₓ), ainsi que l'écart de module complexe (ΔG*) entre les valeurs à 0,1% et à 50% de déformation (effet Payne).

### II. DESCRIPTION DETAILLEE DE L'INVENTION

Les compositions de caoutchouc selon l'invention sont à base d'au moins un (c'est-à-dire au moins un) élastomère isoprénique ; une (au moins une) charge inorganique à titre de charge renforçante ; un système de couplage comportant les Composés I et II décrits en détail ci-après, assurant la liaison entre ladite charge inorganique et l'élastomère isoprénique.

Bien entendu, par l'expression composition "à base de", il faut entendre une composition comportant le mélange et/ou le produit de réaction des différents constituants utilisés, certains de ces constituants de base (par exemple le système de couplage et la charge inorganique renforçante) étant susceptibles de, ou destinés à, réagir entre eux, au moins en partie, lors des différentes phases de fabrication des compositions, en particulier au cours de leur vulcanisation (cuisson).

Dans la présente description, sauf indication expresse différente, tous les pourcentages (%) indiqués sont des % en masse.

### II-1. Elastomère isoprénique

Rappelons tout d'abord que par élastomère (ou caoutchouc, les deux termes étant ici considérés comme synonymes) "diénique", doit être entendu par définition un élastomère issu au moins en partie (i.e., un homopolymère ou un copolymère) de monomères diènes c'est-à-dire de monomères porteurs de deux doubles liaisons carbone-carbone, conjuguées ou non. Par élastomère diénique "essentiellement insaturé", on entend ici un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions générales étant données, on entend dans la présente demande par "élastomère isoprénique", de manière connue, un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR).

Cet élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%.

En coupage avec l'élastomère isoprénique ci-dessus, les compositions de l'invention peuvent contenir des élastomères diéniques autres qu'isopréniques, à titre minoritaire (i.e., pour moins de 50% en poids) ou majoritaire (i.e., pour plus de 50% en poids), selon les applications visées. Elles pourraient également comporter des élastomères non diéniques, voire des polymères autres que des élastomères, par exemple des polymères thermoplastiques. A titre d'exemples de tels élastomères diéniques non isopréniques, on citera notamment tout élastomère diénique fortement insaturé, choisi en particulier dans le groupe constitué par les polybutadiènes (BR), les copolymères de butadiène, notamment les copolymères de styrène-butadiène (SBR), et les mélanges de ces différents élastomères.

L'amélioration du couplage apportée par l'invention est particulièrement notable sur des compositions de caoutchouc dont la base élastomérique est constituée majoritairement (i.e., à plus de 50% en poids) de polyisoprène, i.e., de caoutchouc naturel ou de polyisoprène de synthèse.

La composition conforme à l'invention est particulièrement destinée à une bande de roulement pour pneumatique, qu'il s'agisse d'un pneumatique neuf ou usagé (rechapage), en particulier pour pneumatique destiné à des véhicules industriels ou utilitaires tels que "Poids-lourd" - i.e., métro, bus, engins de transport routier (camions, tracteurs, remorques), véhicules hors-la-route.

Dans un tel cas, le meilleur mode de réalisation connu de l'invention consiste à utiliser comme élastomère isoprénique uniquement du polyisoprène, plus préférentiellement du caoutchouc naturel. C'est pour de telles conditions que l'on a observé les meilleures performances en termes de résistance au roulement et de résistance à l'usure.

Mais l'homme du métier des pneumatiques comprendra que divers coupages entre élastomère isoprénique, notamment caoutchouc naturel, et d'autres élastomères diéniques, en particulier SBR et/ou BR, sont également possibles dans des compositions de caoutchouc conformes à l'invention utilisables par exemple pour diverses parties du pneumatique autres que sa bande de roulement, par exemple de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Selon un autre mode de réalisation préférentiel de l'invention, notamment lorsqu'elle est destinée à un flanc de pneumatique ou à une gomme intérieure étanche de pneumatique sans chambre (ou autre élément imperméable à l'air), la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

### II-2. Charge inorganique renforçante

Par "charge inorganique renforçante", doit être entendu ici, de manière connue, toute charge inorganique ou minérale, quelles que soient sa couleur et son origine (naturelle ou de synthèse), encore appelée charge "blanche", charge "claire" ou encore charge "non-noire" ("*non-black filler*") par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement. Une telle charge se caractérise généralement par la présence de groupes fonctionnels, notamment hydroxyle (-OH), à sa surface, nécessitant en cela l'emploi d'un agent ou système de couplage destiné à assurer une liaison chimique stable entre l'élastomère isoprénique et ladite charge.

Préférentiellement, la charge inorganique renforçante est une charge du type siliceuse ou alumineuse, ou un mélange de ces deux types de charges.

La silice (SiO₂) utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HDS") sont préférées, en particulier lorsque l'invention est mise en oeuvre pour la fabrication de pneumatiques présentant une faible résistance au roulement ; comme exemples de telles silices, on peut citer les silices Ultrasil 7000 de la société Degussa, les silices Zeosil 1165 MP, 1135 MP et 1115 MP de la société Rhodia, la silice Hi-Sil EZ150G de la société PPG, les silices Zeopol 8715, 8745 ou 8755 de la Société Huber, les silices telles que décrites dans la demande WO 03/016387.

L'alumine (Al₂O₃) renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm. Comme exemples non limitatifs de telles alumines renforçantes, on peut citer notamment les alumines "Baikalox A125" ou "CR125" (société Baïkowski), "APA-100RDX" (Condéa), "Aluminoxid C" (Degussa) ou "AKP-G015" (Sumitomo Chemicals).

A titre d'autres exemples de charge inorganique susceptible d'être utilisée dans les compositions de caoutchouc de l'invention peuvent être encore cités des (oxyde-)hydroxydes d'aluminium, des aluminosilicates, des oxydes de titane, des carbures ou nitrures de silicium, tous du type renforçants tels que décrits par exemple dans les demandes WO 99/28376, WO 00/73372, WO 02/053634, WO 2004/003067, WO 2004/056915.

Lorsque les bandes de roulement de l'invention sont destinées à des pneumatiques à faible résistance au roulement, la charge inorganique renforçante utilisée, en particulier s'il s'agit de silice, a de préférence une surface BET comprise entre 60 et 350 m2/g. Un mode de réalisation avantageux de l'invention consiste à utiliser une charge inorganique renforçante, en particulier une silice, ayant une surface spécifique BET élevée, comprise dans un domaine de 130 à 300 m²/g, en raison du haut pouvoir renforçant reconnu de telles charges. Selon un autre mode préférentiel de réalisation de l'invention, on peut utiliser une charge inorganique renforçante, en particulier une silice, présentant une surface spécifique BET inférieure à 130 m²/g, préférentiellement dans un tel cas comprise entre 60 et 130 m²/g (voir par exemple demandes WO03/002648 et WO03/002649).

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-dessus.

L'homme du métier saura adapter le taux de charge inorganique renforçante selon la nature de la charge inorganique utilisée et selon le type de pneumatique concerné, par exemple pneumatique pour moto, pour véhicule de tourisme ou encore pour véhicule utilitaire tel que camionnette ou Poids lourd. De préférence, ce taux de charge inorganique renforçante sera choisi compris entre 20 et 200 pce, plus préférentiellement entre 30 et 150 pce, en particulier supérieur à 40 pce (par exemple compris entre 40 et 120 pce, notamment entre 40 et 80 pce).

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II-3. Système de couplage

Comme expliqué précédemment, un agent de couplage (charge inorganique/ élastomère diénique) est, de manière connue, porteur d'au moins deux fonctions, notées ici "Y" et "X", lui permettant de pouvoir se greffer, d'une part sur la charge inorganique renforçante au moyen de la fonction "Y", d'autre part sur l'élastomère diénique au moyen de la fonction "X".

Un agent de recouvrement de la charge inorganique comporte la seule fonction "Y", par exemple un groupe hydroxyle ou un groupe hydrolysable, active vis-à-vis des sites fonctionnels (par exemple des sites hydroxyle -OH) de la charge inorganique mais est en tout cas dépourvu de la seconde fonction "X" active vis-à-vis de l'élastomère diénique.

Le système de couplage utilisé conformément à l'invention a donc pour caractéristique essentielle de comporter en combinaison :
- un agent de couplage (Composé II) au moins "bifonctionnel" (c'est-à-dire porteur d'au moins une (une ou plusieurs) fonction(s) du type "X" et d'au moins une (une ou plusieurs) fonction(s) du type "Y" du type organosilicique, et
- un agent de recouvrement (Composé I) "monofonctionnel" (c'est-à-dire porteur d'au moins une (une ou plusieurs) fonction du type "Y", mais dépourvu de fonction du type "X", le composé I pouvant être ou non du type organosilicique.

### A) Composé I

Les agents de recouvrement de charge inorganique renforçante telle que silice sont bien connus de l'homme du métier des compositions de caoutchouc pour pneumatiques.

Ce Composé I est de préférence choisi dans le groupe constitué par les silanes hydroxylés ou hydrolysables, par exemple des hydroxysilanes, des alkoxysilanes (notamment des alkyltriéthoxysilanes), des polyols (par exemple des diols, des triols tels que glycérol ou ses dérivés), des polyéthers (par exemple des polyéthylèneglycols), des amines primaires, secondaires ou tertiaires (par exemple des trialcanol-amines), des polysiloxanes hydroxylés ou hydrolysables, par exemple des α,ω-dihydroxy-polyorganosiloxanes, notamment des α,ω-dihydroxy-polydiméthylsiloxanes, et les mélanges de tels composés.

A titre d'exemples préférentiels de silanes hydroxylés ou hydrolysables, on citera en particulier ceux de formule (I-1) :

(R¹)ₜSi(E)₄₋ₜ

dans laquelle :
- t est égal à 1, 2 ou 3 ;
- les symboles R¹ prennent l'une quelconque des significations données ci-après pour le symbole G¹, par exemple représentent chacun un alkyle linéaire ou ramifié en C₁-C₈ (comme par exemple méthyle, éthyle, propyles, butyles), un cycloalkyle en C₅-C₈ (comme par exemple cyclohéxyle), un aryle en C₆-C₁₂ ou aralkyle ayant une partie aryle en C₆-C₁₂ et une partie alkyle en C₁-C₄ (comme par exemple phényle, xylyle, benzyle, phényléthyle) ;
- les symboles E sont des groupes hydroxyle ou hydrolysables ayant l'une quelconque des significations données ci-après pour le symbole G² par exemple représentent chacun un hydroxyle, un groupe alkoxyle en C₁-C₁₀ (comme par exemple méthoxyle, éthoxyle, n-propoxyle, n-butoxyle, méthoxyméthoxyle, éthoxyéthoxyle et méthoxyéthoxyle), un groupe aryloxyle en C₆-C₁₂ (comme par exemple phényloxyle).

A titre d'exemples plus préférentiels de tels silanes de formule (I-1) ci-dessus, on citera les silanes pour lesquels les radicaux R¹, identiques ou différents, sont choisis parmi les radicaux méthyle, éthyle, propyle et phényle ; les symboles E, identiques ou différents, sont choisis dans le groupe formé par les radicaux hydroxyle, méthoxyle, éthoxyle, n-propoxyle, isopropoxyle et n-butoxyle ; et t = 1, 2 ou 3.

A titre d'exemples préférentiels de polyols ou polyéthers, on citera en particulier les diols de formule (I-2):

HO-(R²O)ₛ-R²-OH

où les radicaux R², identiques ou différents entre eux, représentent chacun un reste divalent choisi parmi un groupe hydrocarboné aliphatique, saturé ou insaturé (de préférence un alkylène, linéaire ou ramifié, ayant de 1 à 8, plus préférentiellement de 1 à 4 atomes de carbone) et où "s" a une valeur suffisante pour donner au composé de formule (I-2) une masse moléculaire moyenne en nombre de préférence comprise entre 100 et 30 000, plus préférentiellement entre 200 et 20 000.

A titre d'exemples plus préférentiels de tels diols de formule (I-2), on citera les polyols pour lesquels "s" a une valeur suffisante pour donner une masse moléculaire moyenne en nombre allant de 500 à 10 000, et les radicaux R² sont choisis parmi les radicaux méthylène, éthylène et propylène.

A titre d'exemples préférentiels d'huiles α,ω-(dihydroxy)polyorganosiloxane, on citera en particulier celles de formule (I-3) : 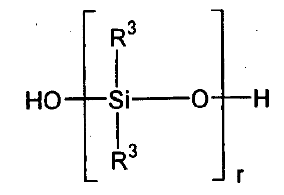 dans laquelle r a une valeur suffisante pour donner à l'huile une viscosité dynamique à 25°C (mesurée à l'aide d'un viscosimètre Brookfield selon norme NFT 76102 de mai 1982) comprise entre 5 et 1000 mPa.s, de préférence entre 10 et 200 mPa.s (par exemple entre 10 et 100 mPa.s), et les radicaux organiques R³ sont de radicaux monovalents, de préférence des groupes hydrocarbonés aliphatiques, saturés ou insaturés, ou des groupes carbocycliques aromatiques : du fait de leur disponibilité dans les produits industriels, ce sont généralement des radicaux méthyle, éthyle, propyle et/ou phényle, de préférence au moins 80% en nombre de ces radicaux R³ étant des radicaux méthyle. On emploiera notamment des huiles de formule (I-3) ci-dessus dans lequelles R³ est le méthyle, r est de préférence compris dans un domaine de 3 à 200, plus préférentiellement de 3 à 60 (par exemple de 3 à 10).

A titre d'exemples préférentiels d'huiles polyorganosiloxane hydrolysables, on citera en particulier celles de formule (I-4) : 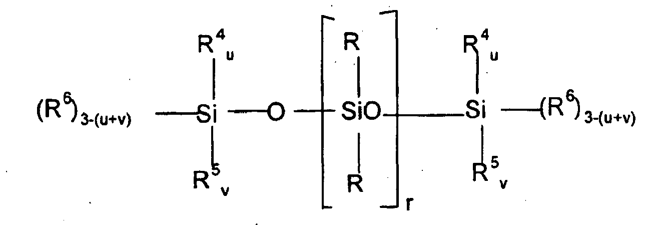 dans laquelle :
- u est égal à 0 ou 1, de préférence égal à 1 ;
- v est égal à 0 ou 1, de préférence égal à 1 ;
- u+v = 0, 1 ou 2, de préférence est égal à 2 ;
- r a une valeur suffisante pour donner à l'huile une viscosité dynamique à 25°C comprise entre 5 et 1000 mPa.s, de préférence entre 10 et 200 mPa.s ;
- les symboles R⁶ représentent un groupe hydrolysable choisi de préférence parmi ceux que représente le symbole G² ci-après ;
- les symboles R⁴, R⁵ et R, identiques ou différents, sont des radicaux monovalents, de préférence représentent chacun un groupe hydrocarboné aliphatique, saturé ou insaturé, ou un groupe carbocyclique aromatique, plus préférentiellement des radicaux méthyle, éthyle, propyle, isopropyle et phényle, encore plus préférentiellement au moins 80% en nombre de ces radicaux R³ étant des radicaux méthyle.

A titre d'exemples préférentiels de polyorganosiloxane fonctionnalisé, on citera en particulier ceux de formule (I-5) : 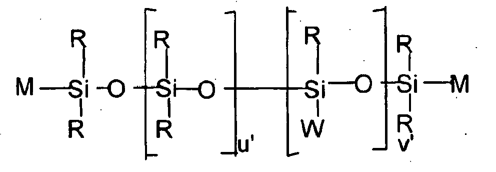 dans laquelle :
- les symboles M, identiques ou différents, représentent chacun un radical monovalent choisi parmi les radicaux répondant aux définitions de R et W ;
- les symboles R, identiques ou différents, sont tels que définis supra à propos de la formule (I-4) ;
- les symboles W représentent chacun un groupe amino fonctionnel -R⁷-NR⁸R⁹ ou -R⁷-NH-R¹⁰-NR⁸R⁹ où : d'une part R⁷ et R¹⁰ représentent chacun un radical divalent choisi parmi un groupe hydrocarboné aliphatique, saturé ou insaturé, et d'autre part R⁸ et R⁹, identiques ou différents, représentent chacun un atome d'hydrogène ou un groupe hydrocarboné aliphatique, saturé ou insaturé ;
- la somme u'+v' est égale ou supérieure à 3 ;
- u' est un nombre entier ou fractionnaire allant de 0 à 100 ;
- v' est un nombre entier ou fractionnaire allant de 0 à 100 ;
- avec la condition selon laquelle si v' = 0 (zéro), alors au moins l'un des symboles M correspond à un radical répondant à la définition de W.

A titre d'exemples plus préférentiels de tels polyorganosiloxanes fonctionnalisés de formule (I-5) ci-dessus, on citera les composés pour lesquels :
- les symboles M représentent chacun un radical monovalent choisi parmi les radicaux répondant aux définitions ci-après de R et W ;
- les symboles R sont choisis dans le groupe formé par les radicaux méthyle, éthyle, propyle, isopropyle et phényle ;
- les symboles W représentent chacun un groupe amino -R⁷-NR⁸R⁹ où R⁷ est une chaîne alkylène en C₁-C₈ et R⁸=R⁹=H ;
- la somme u'+v' va de 3 à 100 ;
- 0 ≤ u' ≤ 60,
- 0 ≤ v' ≤ 40,
- avec la condition selon laquelle si v' = 0 (zéro), alors les deux symboles M correspondent à un radical répondant à la définition de W.

A titre d'exemples encore plus préférentiels de tels polyorganosiloxanes fonctionnalisés de formule (I-5) ci-dessus, on citera les composés pour lesquels :
- les symboles M représentent chacun un radical monovalent choisi parmi les radicaux répondant aux définitions ci-après de R et W ;
- 80% en nombre des symboles R, identiques ou différents, représentent des radicaux méthyle ;
- les symboles W représentent chacun un groupe amino -R⁷-NR⁸R⁹ où R⁷ est un radical méthylène, éthylène ou propylène et R⁸=R⁹=H ;
- la somme u'+v' va de 3 à 100 ;
- 0 ≤ u' ≤ 60 ;
- 0 ≤ v' ≤ 40 ;
- avec la condition avec la condition selon laquelle si v' = 0 (zéro), alors les deux symboles M correspondent à un radical répondant à la définition de W.

Parmi les agents de recouvrement (Composés I) préférentiels sont également utilisables les amines tertaires de formule (I-6) :

HO-R¹¹-NR¹²R¹³

où R¹¹ représente un reste divalent choisi parmi un groupe hydrocarboné aliphatique, saturé ou insaturé ; et R¹² et R¹³, identiques ou différents, représente chacun un atome d'hydrogène, un groupe hydrocarboné aliphatique, saturé ou insaturé, ou un groupe HO-R¹¹-.

A titre d'exemples encore plus préférentiels de tels composés de formule (I-6) ci-dessus, on citera ceux pour lesquels R¹¹ représente une chaîne alkylène, linéaire ou ramifiée, en C₁-C₈, (de préférence méthylène, éthylène ou propylène) et R¹²=R¹³=H.

Les composés I (agents de recouvrement) précédemment décrits sont des produits bien connus de l'homme du métier, pour la plupart disponibles commercialement.

### B) Composé II

Le Composé II est un composé organosilicié polyfonctionnel (au moins bifonctionnel) greffable d'une part sur la charge inorganique renforçante au moyen d'un (au moins un) groupe fonctionnel silylé G, d'autre part sur l'élastomère isoprénique au moyen d'un (au moins un) groupe fonctionnel azo-dicarbonyle, ledit composé organosilicié ayant pour formule :

(II) A-CO-N=N-CO-Z-G

dans laquelle:
○ G est le groupe fonctionnel silylé, porteur d'un (au moins un) groupe hydroxyle ou hydrolysable fixé sur un atome de silicium du composé ;
○ Z est un groupe de liaison divalent reliant le groupe fonctionnel azo-dicarbonyle au groupe fonctionnel silylé ;
○ A représente un groupe hydrocarboné monovalent ou le groupement de formule Z'-G' dans laquelle :
   - Z', identique à ou différent de Z, est un groupe de liaison divalent permettant de relier le groupe fonctionnel azo-dicarbonyle à un autre groupe fonctionnel silylé G' ;
   - G', identique à ou différent de G, est un groupe fonctionnel silylé porteur d'un (au moins un) autre groupe hydroxyle ou hydrolysable fixé sur atome de silicium (identique ou différent de celui du groupe G) ;
○ A, Z et le cas échéant Z' pouvant comporter, indépendamment, un hétéroatome.

On rappelle ici que, selon des définitions bien connues de l'homme du métier, doit être entendu :
- par composé "organosilicié" ou "organosilicique" ("*organosilicon compound*"), un composé organique renfermant au moins une liaison carbone-silicium ;
- par groupe "silylé" un groupe porteur d'un seul (il est alors qualifié de monosilylé) ou de plusieurs (il est alors qualifié alors de polysilylé) atome(s) de silicium.

Dans la formule (II) ci-dessus, l'homme du métier comprendra immédiatement que la fonction (notée "X" en introduction de la présente demande) destinée à assurer la liaison avec l'élastomère isoprénique est assurée par le groupement central azo-dicarbonyle (-CO-N=N-CO-), tandis que la fonction (notée "Y" en introduction de la présente demande) destinée à assurer la liaison avec la charge inorganique renforçante est assurée par le groupe silylé G qui a donc pour caractéristique essentielle de porter un (au moins un) groupe hydroxyle ou hydrolysable fixé sur son atome de silicium (si ce groupe G est du type monosilylé) ou sur au moins un de ses atomes de silicium (si ce groupe G est du type polysilylé).

Le groupe hydrocarboné monovalent pouvant être représenté par A peut être aliphatique, linéaire ou ramifié, ou carbocyclique, notamment aromatique ; il peut être substitué ou non substitué, saturé ou insaturé.

Le groupe divalent Z, comportant de préférence de 1 à 18 atomes de carbone, relie préférentiellement le groupe fonctionnel azo-dicarbonyle au groupe fonctionnel silylé G par l'intermédiaire d'un atome de silicium, ce dernier pouvant être identique ou différent de l'atome de silicium sur lequel est fixé le groupe hydroxyle ou hydrolysable. Z est préférentiellement choisi parmi les groupes hydrocarbonés aliphatiques, saturés ou insaturés, les groupes carbocycliques, saturés, insaturés ou/et aromatiques, monocycliques ou polycycliques, et les groupes présentant une partie hydrocarbonée aliphatique, saturée ou insaturée et une partie carbocyclique telle que définie ci-dessus. Il représente plus préférentiellement une chaîne alkylène, un groupe cycloalkylène saturé, un groupe arylène, ou un groupe divalent constitué d'une combinaison d'au moins deux de ces groupes.

Dans la présente description, on entend par groupe hydrocarboné aliphatique, un groupe linéaire ou ramifié, comprenant de préférence de 1 à 18 atomes de carbone, éventuellement substitué. Avantageusement, ledit groupe hydrocarboné aliphatique comprend de 1 à 12 atomes de carbone, mieux de 1 à 8 atomes de carbone, plus préférentiellement encore de 1 à 6 atomes de carbone.

A titre de groupe hydrocarboné aliphatique saturé, on peut citer les groupes alkyle tels que méthyle, éthyle, propyle, isopropyle, n-butyle, isobutyle, t-butyle, pentyle, isopentyle, néopentyle, 2-méthylbutyle, 1-éthylpropyle, hexyle, isohexyle, néohexyle, 1-méthylpentyle, 3-méthylpentyle, 1,1-diméthylbutyle, 1,3-diméthylbutyle, 2-éthylbutyle, 1-méthyl-1-éthylpropyle, heptyle, 1-méthylhexyle, 1-propylbutyle, 4,4-diméthylpentyle, octyle, 1-méthylheptyle, 2-éthylhexyle, 5,5-diméthylhexyle, nonyle, décyle, 1-méthylnonyle, 3,7-diméthyloctyle, 7,7-diméthyloctyle et hexadécyle.

Les groupes hydrocarbonés aliphatiques insaturés utilisables comprennent une ou plusieurs insaturations, de préférence une, deux ou trois insaturations de type éthylénique (double liaison) ou/et acétylénique (triple liaison). Des exemples en sont les groupes alcényle ou alcynyle dérivant des groupes alkyle définis ci-dessus par élimination de deux atomes d'hydrogène, ou plus. De manière préférée, les groupes hydrocarbonés aliphatiques insaturés comprennent une seule insaturation.

Par radical carbocyclique, est entendu un radical monocyclique ou polycyclique, éventuellement substitué, de préférence en C₃-C₅₀. De façon avantageuse, il s'agit d'un radical en C₃-C₁₈ de préférence mono-, bi- ou tricyclique. Lorsque le radical carbocyclique comprend plus d'un noyau cyclique (cas des carbocycles polycycliques), les noyaux cycliques sont condensés deux à deux. Deux noyaux condensés peuvent être orthocondensés ou péricondensés. Le radical carbocyclique peut comprendre, sauf indications contraires, une partie saturée et/ou une partie aromatique et/ou une partie insaturée.

Des exemples de radicaux carbocycliques saturés sont les groupes cycloalkyle. De manière préférée, les groupes cycloalkyle sont en C₃-C₁₈, mieux encore en C₅-C₁₀. On peut citer notamment les radicaux cyclopentyle, cyclohexyle, cycloheptyle, cyclooctyle, adamantyle ou norbornyle. Le carbocycle insaturé ou toute partie insaturée de type carbocyclique présente une ou plusieurs insaturation éthyléniques, de préférence une, deux ou trois. Il comporte avantageusement de 6 à 50 atomes de carbone, mieux encore de 6 à 20, par exemple de 6 à 18 atomes de carbone. Des exemples de carbocycles insaturés sont les groupes cycloalcényles en C₆-C₁₀. Des exemples de radicaux carbocycliques aromatiques sont les groupes aryle en C₆-C₁₈ et notamment phényle, naphtyle, anthryle et phénanthryle.

Un groupe présentant à la fois une partie aliphatique hydrocarbonée et une partie carbocyclique telles que définies ci-dessus est, par exemple, un groupe arylalkyle tel que benzyle, ouun groupe alkylaryle tel que tolyle.

Les substituants des groupes ou parties aliphatiques hydrocarbonés et des groupes ou parties carbocycliques sont, par exemple, des groupes alkoxyle dans lesquels la partie alkyle est préférentiellement telle que définie ci-dessus.

Les groupements Z' et G' ont les mêmes définitions et caractéristiques préférentielles que celles décrites ci-dessus pour les groupements Z et G.

Z' peut être identique à Z ou différent de ce dernier, il permet de relier le groupe fonctionnel azo-dicarbonyle à un second groupe fonctionnel silylé G' porteur d'un (au moins un) second groupe hydroxyle ou hydrolysable fixé sur un (au moins un) atome de silicium, identique ou différent de celui du groupe G, G' pouvant être lui-même identique à G ou différent de ce dernier.

Selon un mode de réalisation particulièrement préférentiel, au moins l'un des groupes A, Z et le cas échéant Z' comporte un (au moins un) hétéroatome choisi préférentiellement parmi O, S et N. Cet hétéroatome est de préférence relié directement à la liaison carbonyle adjacente.

Lorsqu'un tel hétéroatome est porté par le radical hydrocarboné monovalent A, il l'est de préférence sous la forme d'un reste hydrocarboné monovalent choisi parmi -OR, -NR et -SR (R radical hydrocarboné monovalent quelconque comportant de préférence de 1 à 18 atomes de carbone) dont la valence libre est, plus préférentiellement, reliée directement à la liaison carbonyle adjacente ; le reste -OR est préféré, avec R représentant un alkyle en C₁-C₆, de préférence en C₁-C₄ (méthyle, éthyle, propyle, butyle), plus préférentiellement C₁ (méthyle) ou C₂ (éthyle).

Lorsqu'un tel hétéroatome est porté par Z et/ou le cas échéant Z' (soit par Z seulement, par Z' seulement, ou par les deux), il l'est de préférence sous la forme d'un reste hydrocarboné divalent choisi parmi les restes -R'-NH- ; -R'-O- ; et -R'-S (R' radical hydrocarboné divalent quelconque comportant de préférence de 1 à 18 atomes de carbone) ; le reste -R'-NH- est préféré, avec R' représentant un alkylène en C₁-C₆, de préférence en C₁-C₄ (méthylène, éthylène, propylène, butylène), plus préférentiellement C₃ (propylène).

Selon un mode de réalisation particulièrement préférentiel, le Composé II est un organosilane dont le groupe silylé G répond de préférence à l'une des formules ci-après : 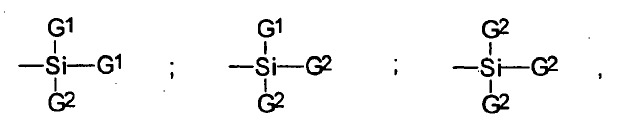 dans lesquelles :
- les radicaux G¹, substitués ou non substitués, identiques ou différents entre eux, sont choisis dans le groupe constitué par les alkyles en C₁-C₁₈, les cycloalkyles en C₅-C₁₈ et les aryles en C₆-C₁₈ ;
- les radicaux G², substitués ou non substitués, identiques ou différents entre eux, sont choisis dans le groupe constitué par l'hydroxyle, les alkoxyles en C₁-C₁₈ et les cycloalkoxyles en C₅-C₁₈.

En d'autres termes, le Composé II préférentiel ci-dessus répond à la formule :

(III) A-CO-N=N-CO-Z-SiG¹₍₃₋ₐ₎G²₍ₐ₎

dans laquelle :
- a est un entier égal à 1, 2 ou 3 ;
- A, Z, G¹ et G² ont les définitions données supra.

Une variante du Composé II de formule (III) consiste en un azosilane dicarbonyle du type "symétrique" de formule :

(IV) G⁴_{(b)}G³_{(3-b)}Si-Z'-CO-N=N-CO-Z-SiG¹₍₃₋ₐ₎G²₍ₐ₎

dans laquelle :
- b, identique à ou différent de a, est un entier égal à 1, 2 ou 3 ;
- G³ et G⁴, respectivement identiques à ou différents de G¹ et G², ont les mêmes définitions que celles données supra, respectivement, pour G¹ et G² ;
- Z', identique à ou différent de Z, a la même définition que celle donnée supra pour Z.

Selon un mode de réalisation préféré, on a dans les formules (III) et (IV) ci-dessus et dans les formules (V) à (X) qui suivent, au moins une, plus préférentiellement l'ensemble, des caractéristiques suivantes qui est vérifié(e) :
- les radicaux G¹ et G³, identiques ou différents entre eux, sont choisis dans le groupe constitué par les groupes alkyle en C₁-C₆, cyclohexyle ou phényle ;
- les radicaux G² et G⁴, identiques ou différents entre eux, sont choisis dans le groupe constitué par les groupes hydroxyle, alkoxyles en C₁-C₈ et cycloalkoxyles en C₅-C₈.

Selon un mode de réalisation plus préféré, on a dans les formules (III) et (IV) ci-dessus et dans les formules (V) à (X) qui suivent, au moins une, plus préférentiellement l'ensemble, des caractéristiques suivantes qui est vérifié(e) :
- les radicaux G¹ et G³ sont choisis parmi les alkyles en C₁-C₄, plus particulièrement parmi méthyle et éthyle ;
- les radicaux G² et G⁴ sont choisis parmi hydroxyle et alkoxyles en C₁-C₄, plus particulièrement parmi hydroxyle, méthoxyle et éthoxyle.

Selon un mode de réalisation particulièrement préférentiel, on a dans les formules (III) et (IV) qui précédent et dans les formules (V) à (X) qui suivent les caractéristiques suivantes qui sont vérifiées :
- Z (et le cas échéant Z') est un alkylène en C₁-C₁₀ comportant un hétéroatome choisi de préférence parmi O, S et N ;
- plus préférentiellement Z (et le cas échéant Z') est un radical divalent choisi dans le groupe constitué par -(CH₂)_{y}- ; -NH-(CH₂)_{y}- ; -O-(CH₂)_{y}- ; y étant un entier de préférence de 1 à 6, plus préférentiellement de 1 à 4, notamment égal à 3.

G¹ et G² d'une part, G³ et a⁴ d'autre part pourraient aussi former ensemble et avec l'atome de silicium qui les porte un groupe carbocyclique monocyclique ou polycyclique ayant de 2 à 10 atomes de carbone cyclique et pouvant comporter un ou plusieurs hétéroatome(s) cyclique(s) oxygéné(s). A titre d'exemple, on citera par exemple les cycles :

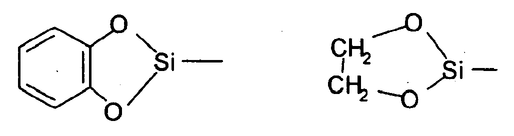

Des azosilanes "symétriques" de formule (IV) dans lesquels A représente le groupement de formule Z'-G' (avec G'=G), et répondant aux caractéristiques préférentielles énoncées précédemment, sont notamment ceux répondant aux formules particulières (IV-n) qui suivent dans lesquelles y et y', identiques ou différents pour une même formule, sont des entiers de 1 à 6, de préférence de 1 à 4, plus préférentiellement égaux à 3 (Z et Z' = propylène) :

(IV-a) (CH₃O)₃Si-(CH₂)_{y'}-CO-N=N-CO-(CH₂)_{y}-Si(OCH₃)₃

(IV-b) (CH₃)(CH₃O)₂Si-(CH₂)_{y'}-CO-N=N-CO-(CH₂)_{y}-Si(OCH₃)₂(CH₃)

(IV-c) (CH₃)₂(CH₃O)Si-(CH₂)_{y'}-CO-N=N-CO-(CH₂)_{y}-Si(OCH₃)(CH₃)₂

(IV-d) (C₂H₅O)₃Si-(CH₂)_{y'}-CO-N=N-CO-(CH₂)_{y}-Si(OC₂H₅)₃

(IV-e) (CH₃)(C₂H₅O)₂Si-(CH₂)_{y'}-CO-N=N-CO-(CH₂)_{y}-Si(OC₂H₅)₂(CH₃)

(IV-f) (CH₃)₂(C₂H₅O)Si-(CH₂)_{y'}-CO-N=N-CO-(CH₂)_{y}-Si(OC₂H₅)(CH₃)₂

(IV-g) (HO)₃Si-(CH₂)_{y'}-CO-N=N-CO-(CH₂)_{y}-Si(OH)₃

(IV-h) (CH₃)(HO)₂Si-(CH₂)_{y'}-CO-N=N-CO-(CH₂)_{y}-Si(OH)₂(CH₃)

(IV-i) (CH₃)₂(HO)Si-(CH₂)_{y'}-CO-N=N-CO-(CH₂)_{y}-Si (OH)(CH₃)₂

(IV-j) (CH₃)(HO)₂Si-(CH₂)_{y'}-CO-N=N-CO-(CH₂)_{y}-Si(OH)₂(CH₃)

(IV-k) (CH₃)₂(HO)Si-(CH₂)_{y'}-CO-N=N-CO-(CH₂)_{y}-Si(OH)(CH₃)₂

Des azosilanes "asymétriques" de formule (III) dans lesquels A comporte un atome d'oxygène à titre d'hétéroatome, et répondant aux caractéristiques préférentielles énoncées précédemment, sont notamment ceux répondant à la formule particulière (V) qui suit :

(V) R-O-CO-N=N-CO-Z-SiG¹₍₃₋ₐ₎G²₍ₐ₎

dans laquelle :
- a, Z, G¹ et G² ont les définitions données supra ;
- R représente un alkyle en C₁-C₆, de préférence en C₁-C₄, plus préférentiellement le méthyle ou l'éthyle,
à titre d'exemple ceux répondant aux formules particulières (V-n) qui suivent dans lesquelles y est un entier de 1 à 6, de préférence de 1 à 4, plus préférentiellement égal à 3 (Z = propylène) :

(V-a) CH₃-O-CO-N=N-CO-(CH₂)_{y}-Si(OCH₃)₃

(V-b) CH₃-O-CO-N=N-CO-(CH₂)_{y}-Si(OCH₃)₂(CH₃)

(V-c) CH₃-O-CO-N=N-CO-(CH₂)_{y}-Si(OCH₃)(CH₃)₂

(V-d) C₂H₅-O-CO-N=N-CO-(CH₂)_{y}-Si(OCH₃)₃

(V-e) C₂H₅-O-CO-N=N-CO-(CH₂)_{y}-Si(OCH₃)₂(CH₃)

(V-f) C₂H₅-O-CO-N=N-CO-(CH₂)_{y}-Si(OCH₃)(CH₃)₂

(V-g) CH₃-O-CO-N=N-CO-(CH₂)_{y}-Si(OC₂H₅)₃

(V-h) CH₃-O-CO-N=N-CO-(CH₂)_{y}-Si(OC₂H₅)₂(CH₃)

(V-i) CH₃-O-CO-N=N-CO-(CH₂)_{y}-Si(OC₂H₃)(CH₃)₂

(V-j) C₂H₅-O-CO-N=N-CO-(CH₂)_{y}-Si(OC₂H₅)₃

(V-k) C₂H₅-O-CO-N=N-CO-(CH₂)_{y}-Si(OC₂H₅)₂(CH₃)

(V-l) C₂H₅-O-CO-N=N-CO-(CH₂)_{y}-Si(OC₂H₅)(CH₃)₂

(V-m) C₂H₅-O-CO-N=N-CO-(CH₂)_{y}-Si(OH)₃

(V-n) CH₃-O-CO-N=N-CO-(CH₂)_{y}-Si(OH)₃

(V-o) CH₃-O-CO-N=N-CO-(CH₂)_{y}-Si(OH)₂(CH₃)

(V-p) CH₃-O-CO-N=N-CO-(CH₂)_{y}-Si(OH)(CH₃)₂

(V-q) C₂H₅-O-CO-N=N-CO-(CH₂)_{y}-Si(OH)₂(CH₃)

(V-r) C₂H₅-O-CO-N=N-CO-(CH₂)_{y}-Si(OH)(CH₃)₂

Des composés azosilanes, symétriques ou asymétriques, dans lesquels Z comporte un atome d'azote à titre d'hétéroatome, sont par exemple ceux correspondants aux formules (VI) ou (VII) qui suivent dans lesquelles y et y', identiques ou différents pour une même formule, sont des entiers de 1 à 6, de préférence de 1 à 4, plus préférentiellement égaux à 3 :

(VI) A-CO-N=N-CO-NH-(CH₂)_{y}-SiG¹₍₃₋ₐ₎G²₍ₐ₎

(VII) G⁴_{(b)}G³_{(3-b)}Si-(CH₂)_{y'}-HN-CO-N=N-CO-NH-(CH₂)_{y}-SiG¹₍₃₋ₐ₎G²₍ₐ₎

Des exemples particuliers de composés de formules (VI-n) sont ceux de formules :

(VI-a) CH₃-O-CO-N=N-CO-NH-(CH₂)_{y}-Si(OCH₃)₃

(VI-b) CH₃-O-CO-N=N-CO-NH-(CH₂)_{y}-Si(OCH₃)₂(CH₃)

(VI-c) CH₃-O-CO-N=N-CO-NH-(CH₂)_{y}-Si(OCH₃)(CH₃)₂

(VI-d) C₂H₅-O-CO-N=N-CO-NH-(CH₂)_{y}-Si(OCH₃)₃

(VI-e) C₂H₅-O-CO-N=N-CO-NH-(CH₂)_{y}-Si(OCH₃)₂(CH₃)

(VI-f) C₂H₅-O-CO-N=N-CO-NH-(CH₂)_{y}-Si(OCH₃)(CH₃)₂

(VI-g) CH₃-O-CO**-**N=N-CO-NH-(CH₂)_{y}-Si(OC₂H₅)₃

(VI-h) CH₃-O-CO-N=N-CO-NH-(CH₂)_{y}-Si(OC₂H₅)₂(CH₃)

(VI-i) CH₃-O-CO-N=N-CO-NH-(CH₂)_{y}-Si(OC₂H₅)(CH₃)₂

(VI-j) C₂H₅-O-CO-N=N-CO-NH-(CH₂)_{y}-Si(OC₂H₅)₃

(VI-k) C₂H₅-O-CO-N=N-CO-NH-(CH₂)_{y}-Si(OC₂H₅)₂(CH₃)

(VI-l) C₂H₅-O-CO-N=N-CO-NH-(CH₂)_{y}-Si(OC₂H₅)(CH₃)₂ (VI-m) CH₃-O-CO-N=N-CO-NH-(CH₂)_{y}-Si(OH)₃

(VI-n) CH₃-O-CO-N=N-CO-NH-(CH₂)_{y}-Si(OH)₂(CH₃)

(VI-o) CH₃-O-CO-N=N-CO-NH-(CH₂)_{y}-Si(OH)(CH₃)₂

(VI-p) C₂H₅-O-CO-N=N-CO-NH-(CH₂)_{y}-Si(OH)₃

(VI-q) C₂H₅-O-CO-N=N-CO-NH-(CH₂)_{y}-Si(OH)₂(CH₃)

(VI-r) C₂H₅-O-CO-N=N-CO-NH-(CH₂)_{y}-Si(OH)(CH₃)₂

Des exemples particuliers de composés de formules (VII) sont ceux de formules (VII-n) ci-dessous dans lesquelles y et y', identiques ou différents pour une même formule, sont des entiers de 1 à 6, de préférence de 1 à 4, plus préférentiellement égaux à 3 :

(VII-a) (CH₃O)₃Si-(CH₂)_{y'}-HN-CO-N=N-CO-NH-(CH₂)_{y}-Si(OCH₃)₃

(VII-b) (CH₃)(CH₃O)₂Si-(CH₂)_{y'}-HN-CO-N=N-CO-NH-(CH₂)_{y}-Si(OCH₃)₂(CH₃)

(VII-c) (CH₃)₂(CH₃O)Si-(CH₂)_{y'}-HN-CO-N=N-CO-NH-(CH₂)_{y}-Si(OCH₃)(CH₃)₂

(VII-d) (C₂H₅O)₃Si-(CH₂)_{y'}-HN-CO-N=N-CO-NH-(CH₂)_{y}-Si(OC₂H₅)₃

(VII-e) (CH₃)(C₂H₅O)₂Si-(CH₂)_{y'}-HN-CO-N=N-CO-NH-(CH₂)_{y}-Si(OC₂H₅)₂(CH₃)

(VII-f) (CH₃)₂(C₂H₅O)Si-(CH₂)_{y'}-HN-CO-N=N-CO-NH-(CH₂)_{y}-Si(OC₂H₅)(CH₃)₂

(VII-g) (HO)₃Si-(CH₂)_{y'}-HN-CO-N=N-CO-NH-(CH₂)_{y}-Si(OH)₃

(VII-h) (CH₃)(HO)₂Si-(CH₂)_{y'}-HN-CO-N=N-CO-NH-(CH₂)_{y}-Si(OH)₂(CH₃)

(VII-i) (CH₃)₂(HO)Si-(CH₂)_{y'}-HN-CO-N=N-CO-NH-(CH₂)_{y}-Si(OH)(CH₃)₂

(VII-k) (C₂H₅)(HO)₂Si-(CH₂)_{y'}-HN-CO-N=N-CO-NH-(CH₂)_{y}-Si(OH)₂(C₂H₅)

(VII-l) (C₂H₅)₂(HO)Si-(CH₂)_{y'}-HN-CO-N=N-CO-NH-(CH₂)_{y}-Si(OH)(C₂H₅)₂

Des composés azosilanes, symétriques ou asymétriques, dans lesquels A et Z comportent un atome d'oxygène à titre d'hétéroatome, sont par exemple ceux correspondants aux formules (VIII) ou (IX) qui suivent dans lesquelles y et y', identiques ou différents pour une même formule, sont des entiers de 1 à 6, de préférence de 1 à 4, plus préférentiellement égaux à 3 :

(VIII) A-CO-N=N-CO-O-(CH₂)_{y}-SiG¹₍₃₋ₐ₎G²₍ₐ₎

(IX) G⁴_{(b)}G³_{(3-b)}Si-(CH₂)_{y'}-O-CO-N=N=CO-O-(CH₂)_{y}-SiG¹₍₃₋ₐ₎G²₍ₐ₎

Des exemples particuliers de composés de formules (VIII-n) sont ceux de formules :

(VIII-a) CH₃-O-CO-N=N-CO-O-(CH₂)_{y}-Si(OCH₃)₃

(VIII-b) CH₃-O-CO-N=N-CO-O-(CH₂)_{y}-Si(OCH₃)₂(CH₃)

(VIII-c) CH₃-O-CO-N=N-CO-O-(CH₂)_{y}-Si(OCH₃)(CH₃)₂

(VIII-d) C₂H₅-O-CO-N=N-CO-O-(CH₂)_{y}-Si(OCH₃)₃

(VIII-e) C₂H₅-O-CO-N=N-CO-O-(CH₂)_{y}-Si(OCH₃)₂(CH₃)

(VIII-f) C₂H₅-O-CO-N=N-CO-O-(CH₂)_{y}-Si(OCH₃)(CH₃)₂

(VIII-g) CH₃-O-CO-N=N-CO-O-(CH₂)_{y}-Si(OC₂H₅)₃

(VIII-h) CH₃-O**-**CO-N=N-CO-O-(CH₂)_{y}-Si(OC₂H₅)₂(CH₃)

(VIII-i) CH₃-O-CO-N=N-CO-O-(CH₂)_{y}-Si(OC₂H₅)(CH₃)₂

(VIII-j) C₂H₅-O-CO-N=N-CO-NH-(CH₂)_{y}-Si(OC₂H₅)₃

(VIII-k) C₂H₅-O-CO-N=N-CO-O-(CH₂)_{y}-Si(OC₂H₅)₂₍CH₃C₂H₅)

(VIII-l) C₂H₅-O-CO-N=N-CO-O-(CH₂)_{y}-Si(OC₂H₅)(CH₃C₂H₅)₂

(VIII-m) CH₃-O-CO-N=N-CO-O-(CH₂)_{y}-Si(OH)₃

(VIII-n) CH₃-O-CO-N=N-CO-O-(CH₂)_{y}-Si(OH)₂(CH₃)

(VIII-o) CH₃-O-CO-N=N-CO-O-(CH₂)_{y}-Si(OH)(CH₃)₂

(VIII-p) C₂H₅-O-CO-N=N-CO-O-(CH₂)_{y}-Si(OH)₃

(VIII-q) C₂H₅-O-CO-N=N-CO-O-(CH₂)_{y}-Si(OH)₂(CH₃C₂H₅)

(VIII-r) C₂H₅-O-CO-N=N-CO-O-(CH₂)_{y}-Si(OH)(CH₃C₂H₅)₂

Des exemples particuliers de composés de formules (IX) sont ceux de formules (IX-n) ci-dessous dans lesquelles y et y', identiques ou différents pour une même formule, sont des entiers de 1 à 6, de préférence de 1 à 4, plus préférentiellement égaux à 3 :

(IX-a) (CH₃O)₃Si-(CH₂)_{y'}-O-CO-N=N-CO-O-(CH₂)_{y}-Si(OCH₃)₃

(IX-b) (CH₃)(CH₃O)₂Si-(CH₂)_{y'}-O-CO-N=N-CO-O-(CH₂)_{y}-Si(OCH₃)₂(CH₃)

(IX-c) (CH₃)₂(CH₃O)Si-(CH₂)_{y'}-O-CO-N=N-CO-O-(CH₂)_{y}-Si(OCH₃)(CH₃)₂

(IX-d) (C₂H₅O)₃Si-(CH₂)_{y'}-O-CO-N=N-CO-O-(CH₂)_{y}-Si(OC₂H₅)₃

(IX-e) (CH₃C₂H₅)(C₂H₅O)₂Si-(CH₂)_{y'}-O-CO-N=N-CO-O-(CH₂)_{y}-Si(OC₂H₅)₂(CH₃C₂H₅)

(IX-f) (CH₃C₂H₅)₂(C₂H₅O)Si-(CH₂)_{y'}-O-CO-N=N-CO-O-(CH₂)_{y}-Si(OC₂H₅)(CH₃C₂H₅)₂

(IX-g) (HO)₃Si-(CH₂)_{y'}-O-CO-N=N-CO-O-(CH₂)_{y}-Si(OH)₃

(IX-h) (CH₃)(HO)₂Si-(CH₂)_{y'}-O-CO-N=N-CO-O-(CH₂)_{y}-Si(OH)₂(CH₃)

(IX-i) (CH₃)₂(HO)Si-(CH₂)_{y'}-O-CO-N=N-CO-O-(CH₂)_{y}-Si(OH)(CH₃)₂

(IX-k) (C₂H₅)(HO)₂Si-(CH₂)_{y'}-O-CO-N=N-CO-O-(CH₂)_{y}-Si(OH)₂(C₂H₅)

(IX-l) (C₂H₅)₂(HO)Si-(CH₂)_{y'}-O-CO-N=N-CO-O-(CH₂)_{y}-Si(OH)(C₂H₅)₂

Toutes les formules particulières (III) à (IX) ci-dessus couvraient des Composés II se présentant sous forme d'azosilanes, mais d'autres composés organosiliciques sont également utilisables, par exemple des azosiloxanes eux aussi polyfonctionnels (au moins bifonctionnels) comportant, à titre de groupes G et/ou G', dans la formule (II) supra, un ou plusieurs motif(s) siloxane en lieu et place du ou des motif(s) silane, ou des mélanges de tels siloxanes avec de tels silanes. On rappelle que par "siloxane" doit être entendu de manière connue tout composé, oligomère, polymère comportant au moins un (i.e., un ou plusieurs) groupement(s) = Si-O-Si ≡.

Ainsi, selon une autre représentation symbolique possible, le Composé II est un composé organosilicique comportant les motifs siloxyle de formules générales suivantes :

(X) [(G⁰)₃SiO_{1/2}]ₘ [(G⁰)₂SiO_{2/2}]ₙ [G⁰SiO_{3/2}]ₒ [SiO_{4/2}]ₚ [(G²)_{c}(G¹)_{c'}(A-CO-N=N-CO-Z)SiO_{(3-c-c')/2}]_{q}

dans lesquelles :
- m, n, o, p représentent chacun un nombre entier ou fractionnaire égal ou supérieur à 0 ;
- q représente un nombre entier ou fractionnaire égal ou supérieur à 1 ;
- c représente un nombre entier choisi parmi 0, 1, 2 et 3 ;
- c' représente un nombre entier choisi parmi 0, 1 et 2 ;
- la somme c+c' se situe dans l'intervalle allant de 0 à 3 avec les conditions selon lesquelles :
   o quand c = 0, alors au moins un symbole G⁰ répond à la définition donnée pour G² ;
   o quand c+c' = 3, alors m = n = o = p = 0 (zéro) ;
- les symboles G⁰, identiques ou différents, représentent chacun l'un des groupes correspondant à G² ou G¹ ;
- A, Z, G¹ et G² ont les définitions données supra pour la formule générale (II) et pour les formules particulières (III) à (IX).

L'homme du métier comprend qu'une telle formule générique (X) permet de définir un composé organosilicique choisi dans le groupe constitué par les azosilanes, les azosiloxanes (y compris oligomères et polymères siloxane) et les mélanges de tels composés. Cette notation simplifiée est notamment bien connue de dans le domaine des organosiloxanes ; elle englobe les différentes formules particulières possibles pour les motifs siloxyle, quels que soient notamment leur taux de fonctionnalisation, leur position sur la molécule ou la chaîne siloxane (par exemple le long de la chaîne ou en bout(s) de chaîne) ou la nature du siloxane (par exemple un polyorganosiloxane linéaire, branché ou cyclique, un copolymère statistique, séquencé ou à blocs). En particulier, doit être bien entendu compris que le groupement (A-CO-N=N-CO-Z) est relié à l'atome de Si du motif SiO(_{3-c-c')/2} via le radical divalent -Z-.

En d'autres termes, on entend définir par la formule (X), au sens de l'invention, les composés suivants :
- (a): au moins un azoorganosilane fonctionnalisé correspondant à la formule (III) ou, ce qui est totalement équivalent, à la formule (X) dans laquelle m = n = p = o = 0 (zéro), q = 1 et c+c' = 3 ;
- (β): au moins un azoorganosiloxane fonctionnalisé correspondant à la formule (X) dans laquelle la somme c + c' se situe alors dans l'intervalle allant de 0 à 2, et soit au moins un des nombres m, n, o, p est différent de 0 (zéro) et q est égal ou supérieur à 1 ; soit q est supérieur à 1 et chacun des nombres m, n, o, p a alors une valeur quelconque ; et
- (γ): tout mélange des composés (α) et (β) ci-dessus.

Les azosilanes de type (α) ci-dessus peuvent être préparés selon un procédé de synthèse comportant les étapes décrites ci-après.

On fait tout d'abord réagir un silane précurseur de formule (G²)_{c(}G¹)_{c'} Si-P¹ avec un dérivé hydrazo précurseur de formule P²-NH-NR-CO-A, formules dans lesquelles les symboles G¹, G² et A sont tels que définis ci-avant, c + c' = 3 et P¹ et P² représentent des groupes dont la structure et la fonctionnalité de chacun sont telles que ces groupes sont capables de réagir l'un avec l'autre pour donner naissance à l'enchaînement central -Z-CO- de manière à conduire au silane hydrazo de formule :

(G²)_{c}(G¹)_{c'} Si-Z-CO-NH-NH-CO-A

auquel on fait subir ensuite une réaction d'oxydation du groupe hydrazo selon le schéma suivant :

(G²)_{c}(G¹)_{c'} Si-Z-CO-NH-NH-CO-A → (G²)_{c}(G¹)_{c'} Si-Z-CO-N=N-CO-A

L'oxydation se produit facilement en opérant à l'aide d'un système oxydant à base par exemple de N-bromosuccinimide et de pyridine, utilisés en quantité stoechiométrique ou en excès par rapport à cette dernière.

Dans le cas par exemple de la préparation des organosilanes de formule (VI) qui conviennent particulièrement bien, dans la structure desquels le symbole Z représente alors le radical divalent -NH-(CH₂)_{y}- (y entier de 1 à 6, de préférence 1 à 4, plus préférentiellement égal à 3), le schéma de synthèse appliqué est par exemple le suivant :
■ On fait réagir un silane précurseur de formule (G²)ₐ(G¹)₃₋ₐ Si-(CH₂)_{y}-NCO avec un dérivé hydrazo précurseur de formule H₂N-NH-CO-A, pour obtenir le silane hydrazo de formule :

   (G²)ₐ(G¹)₃₋ₐ Si-(CH₂)_{y}-NH-CO-NH-NH-CO-A
■ Puis, on fait subir à ce silane hydrazo une réaction d'oxydation du groupe hydrazo selon le schéma suivant :

   (G²)ₐ(G¹)₃₋ₐSi-(CH₂)_{y-}NH-CO-NH-NH-CO-A → (G²)ₐ(G¹)₃₋ₐSi-(CH₂)_{y}-NH-CO-N=N-CO-A

En ce qui concerne la manière pratique de mettre en oeuvre le procédé qui vient d'être décrit pour l'obtention du silane hydrazo décrit ci-dessus, on pourra se reporter par exemple au document de brevet FR-A-2 340 323 (ou US-A-4,118,367).

Les composés organosiliciques fonctionnalisés de type (β) et (γ) peuvent être préparés selon un procédé de synthèse consistant à oxyder le groupe hydrazo du silane précurseur (G²)_{c}(G¹)_{c'} Si-Z-CO-NH-NH-CO-A à l'aide d'un système oxydant comprenant au moins un oxydant (par exemple un halogène comme le brome) et au moins une base (par exemple une base minérale comme Na₂CO₃), en faisant intervenir cette fois un réactif supplémentaire choisi parmi mono- et polyalkoxysilanes (à titre d'exemple le triméthyléthoxysilane), et en opérant de préférence au sein d'un milieu liquide organique (par exemple en utilisant un solvant comme le dichlorométhane).

Un mode opératoire avantageux pour conduire ce procédé consiste à charger dans le réacteur à température ambiante (23°C) : le silane précurseur ((G²)_{c}(G¹)_{c'} Si-Z-CO-NH-NH-CO-A), la base (sa quantité dépendant de l'agent oxydant mis en oeuvre ; par exemple, dans le cas du brome, on utilise deux équivalents molaires de base par rapport au brome), le solvant organique et le réactif supplémentaire (sa quantité correspondant par exemple à au moins un équivalent molaire par rapport au précurseur), puis à additionner progressivement dans le milieu réactionnel le système oxydant (sa quantité molaire étant par exemple stoechiométrique par rapport à celle du précurseur).

Comme azoorganosiloxanes de type (β) conviennent particulièrement ceux correspondant à la formule (X) dans laquelle la somme c + c' est égal à 1 ou 2 ; m se situe dans l'intervalle de 1 à 2 ; n = o = p = 0 (zéro) et q = 1.

A titre d'exemple d'un tel composé azosiloxane (β) de formule générique (X) dans lequel :
- c = 2 ;
- c' = 0 (zéro) ;
- q = 1 ;
- m = 1 ;
- n = p = o = 0 (zéro),
peut être cité par exemple le composé de formule (XI) (Me = méthyle, Et = éthyle):

(XI) [Me₃SiO_{1/2}] [(EtO)₂ (A-CO-N=N-CO-Z)SiO_{1/2}]

notamment le composé de formule particulière (XI-1):

(XI-1) [Me₃SiO_{1/2}] [(EtO)₂ (Et-O-CO-N=N-CO-NH-(CH₂)₃)SiO_{1/2}]

On rappelle que la représentation des formules (XI) et (XI-1) ci-dessus signifie, de manière bien connue de l'homme du métier, qu'il existe donc un premier atome de Si porteur à la fois de la fonction "X" (azo activée) et de deux fonctions "Y" (éthoxy), cet atome de Si partageant (sur sa 4^{ème} valence) un atome d'oxygène avec un second atome de Si porteur des trois groupes méthyle.

Un tel composé de formule (XI-1) présente donc la forme développée qui suit :

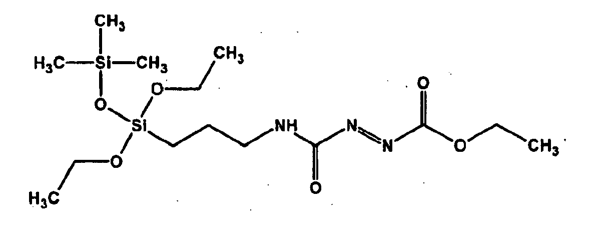

A titre d'un autre exemple d'un composé azosiloxane de formule générique (X) dans lequel :
- c = 1 ;
- c' = 0 (zéro) ;
- q = 1;
- m = 2;
- n = p = o = 0 (zéro),
peut être cité par exemple le composé de formule (XII) (Me = méthyle, Et = éthyle):

(XII) [Me₃SiO_{1/2}]₂ [(EtO) (A-CO-N=N-CO-Z)SiO_{2/2}]

notamment le composé de formule particulière) (XII-1):

(XII-1) [Me₃SiO_{1/2}]₂ [(EtO) (Et-O-CO-N=N-CO-NH-(CH₂)₃)SiO_{2/2}]

La représentation ci-dessus des formules (XII) et (XII-1) signifie de manière connue qu'il existe un atome de Si central porteur de la fonction "X" (azo activée) et de la fonction "Y" (éthoxy) sur deux de ses valences, partageant un atome d'oxygène avec deux atomes de Si adjacents porteurs des groupe méthyle.

Un tel composé de formule (XII-1) présente donc sous une forme développée la formule qui suit :

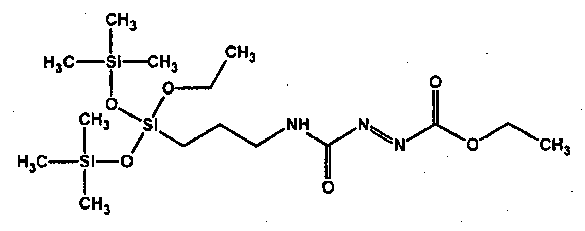

Dans le cas par exemple de la préparation des organosiloxanes de formule (XI) et (XII) qui conviennent particulièrement bien, dans la structure desquels le symbole A représente le radical monovalent Et-O- et le symbole Z représente le radical divalent -NH-(CH₂)₃-, le schéma de synthèse appliqué est par exemple le suivant.

Dans un réacteur de 250 mL, sont introduits 10 g (28,4 mmol, 1 éq) du composé **1** suivant (Et = éthyle) : 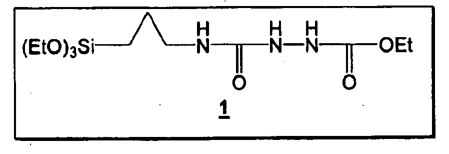 puis 7,53 g (71 mmol, soit 2,5 éq) de Na₂CO₃ sec et 50 mL d'un mélange 50/50 (vol/vol) de triméthyléthoxysilane et de dichlorométhane. Une solution de 4,55 g de brome (28,4 mmol, soit 1 éq) dans 15 mL de dichlorométhane est ajoutée goutte à goutte en 1 heure. Le mélange réactionnel est agité 30 min supplémentaires après la fin de l'addition du brome.

Le mélange réactionnel est ensuite filtré puis concentré sous vide. 9,77 g d'un liquide orange vif fluide sont obtenus. L'analyse par RMN¹H montre que le composé **1** a été entièrement consommé, que la groupement azo a été formée sélectivement et que la perte en SiOEt est limitée.

Le produit final obtenu (composé (γ) ci-dessus) est un mélange des deux espèces siloxane de formule (XI-1) et (XII-1) et de l'espèce silane (VI-j):

(VI-j) C₂H₅-O-CO-N=N-CO-NH-(CH₂)_{y}-Si(OC₂H₅)₃

(XI-l) [Me₃SiO_{1/2}] [(EtO)₂ (Et-O-CO-N=N-CO-NH-(CH₂)₃)SiO_{1/2}]

(XII-l) [Me₃SiO_{1/2}]₂ [(EtO) (Et-O-CO-N=N-CO-NH-(CH₂)₃)SiO_{2/2}]

Plus généralement, les azoorganosiloxanes de type (β) sont de préférence des oligomères siloxanes comportant de 2 à 20, plus préférentiellement de 2 à 12 (par exemple de 2 à 6) atomes de silicium (nombre correspondant à la somme m+n+o+p+q de la formule X).

Dans les compositions de caoutchouc conformes à l'invention, la teneur globale en système de couplage est préférentiellement comprise entre 2 et 15 pce, plus préférentiellement entre 2 et 12 pce (par exemple entre 4 et 8 pce). Mais il est en général souhaitable d'en utiliser le moins possible. Par rapport au poids de charge inorganique non-noire renforçante, le taux de système de couplage représente typiquement entre 0,5 et 15% en poids par rapport à la quantité de charge inorganique ; de préférence, il est inférieur à 12%, plus préférentiellement inférieur à 10% en poids par rapport à cette quantité de charge

Le rapport pondéral (Composé I : Composé II) est de préférence compris entre 1:10 et 10:1, plus préférentiellement entre 1:5 et 5:1, encore plus préférentiellement entre 1:3 et 3:1 (par exemple entre 1:2 (0,5) et 2:1 (2,0)).

Tout ou partie du système de couplage selon l'invention pourrait être préalablement greffé (via les fonctions "X" du composé II) sur l'élastomère isoprénique de la composition de l'invention, l'élastomère ainsi fonctionnalisé ou "précouplé" comportant alors les fonctions "Y" libre pour la charge inorganique renforçante. Tout ou partie de ce système de couplage pourrait également être préalablement greffé (via les fonctions "Y" du Composé I ou du Composé II) sur la charge inorganique renforçante, la charge ainsi "précouplée" pouvant ensuite être liée à l'élastomère diénique par l'intermédiaire des fonctions libres "X". On préfère toutefois, notamment pour des raisons de meilleure mise en oeuvre des compositions de caoutchouc à l'état cru, utiliser tout ou partie de l'agent de couplage soit greffé sur la charge, soit à l'état libre (i.e., non greffé).

### II-4. Additifs divers

Les compositions de caoutchouc conformes à l'invention comportent également tout ou partie des additifs usuels habituellement utilisés dans les compositions d'élastomères destinées à la fabrication de pneumatiques ou produits-semi-finis pour pneumatique, comme par exemple des plastifiants ou des huiles d'extension, que ces derniers soient de nature aromatique ou non-aromatique, des pigments, des agents de protection tels que cires anti-ozone, anti-ozonants chimiques, des agents anti-oxydants qu'il est préférable de conserver présents dans la masse, des agents anti-fatigue, des résines renforçantes ou plastifiantes, des bismaléimides, des accepteurs (par exemple résine phénolique novolaque) ou des donneurs de méthylène (par exemple HMT ou H3M) tels que décrits par exemple dans la demande WO 02/10269 précitée, un système de réticulation à base soit de soufre, soit de donneurs de soufre et/ou de peroxyde et/ou de bismaléimides, des accélérateurs et/ou activateurs de vulcanisation, des agents antiréversion tels que par exemple l'hexathiosulfonate de sodium ou le N,N'-m-phénylène-biscitraconimide. L'homme du métier saura ajuster la formulation de la composition en fonction de ses besoins particuliers.

De préférence, ces compositions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés. Le taux global d'un tel agent plastifiant préférentiel est de préférence compris entre 15 et 45 pce, plus préférentiellement entre 20 et 40 pce.

A la charge renforçante précédemment décrite, c'est-à-dire la charge renforçante non-noire (en particulier inorganique) plus noir de carbone le cas échéant, peuvent être également ajoutés, en fonction de l'application visée, des charges inertes (i.e., non renforçantes) telles que particules d'argile, bentonite, talc, craie, kaolin, utilisables par exemple dans des flancs ou des bandes de roulement de pneumatique colorés.

Ces compositions peuvent également contenir, en complément des agents de couplage, des activateurs de couplage, des agents d'aide à la mise en oeuvre susceptibles de manière connue, grâce à une amélioration de la dispersion de la charge non-noire dans la matrice de caoutchouc et à un abaissement de la viscosité des compositions, d'améliorer leur faculté de mise en oeuvre à l'état cru.

### II-5. Préparation des compositions de caoutchouc

Les compositions sont fabriquées dans des mélangeurs appropriés, en utilisant deux phases de préparation successives bien connues de l'homme du métier : une première phase de travail ou malaxage thermo-mécanique (parfois qualifiée de phase "non-productive") à haute température, jusqu'à une température maximale (notée Tₘₐₓ) comprise entre 110°C et 190°C, de préférence entre 130°C et 180°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Le procédé de fabrication selon l'invention est **caractérisé en ce qu**'au moins la charge inorganique renforçante et tout ou partie du système de couplage sont incorporés par malaxage à l'élastomère diénique, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 110°C et 190°C, de préférence comprise entre 130°C et 180°C.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base nécessaires (élastomère diénique, charge inorganique renforçante et tout ou partie du système de couplage), puis dans un deuxième temps, par exemple après une à deux minutes de malaxage, les additifs divers à l'exception du système de vulcanisation. La durée totale du malaxage, dans cette phase non-productive, est de préférence comprise entre 2 et 10 min. Après refroidissement du mélange ainsi obtenu, on incorpore alors, le cas échéant la seconde partie du système de couplage, puis le système de vulcanisation à basse température, généralement dans un mélangeur externe tel qu'un mélangeur à cylindres ; le tout est alors mélangé (phase productive) pendant quelques minutes, par exemple entre 5 et 15 minutes.

En ce qui concerne l'introduction du système de couplage, selon un mode de réalisation particulièrement préférentiel, la totalité du composé I (agent de recouvrement) est introduite pendant la phase non-productive, en même temps que la charge inorganique, tandis que l'introduction du Composé II (agent de couplage) est fractionnée (par exemple à raison de 75/25, 50/50 ou 25/75 parties respectives en poids) sur les deux phases successives, respectivement d'abord non-productive (i.e., dans le mélangeur interne) puis productive (par exemple dans le mélangeur externe) ; toutefois, selon d'autres modes de réalisation possibles, la totalité du Composé II pourrait être introduite soit dans la phase non-productive, soit dans la phase productive ; de même, une fraction du Composé I (agent de recouvrement) pourrait être introduite pendant la phase productive.

Il convient de noter qu'il est possible d'introduire tout ou partie du Composé II sous une forme supportée (la mise sur support étant réalisée au préalable) sur un solide compatible avec les structures chimiques correspondant à ce Composé ; un tel support est notamment du noir de carbone. Par exemple, lors du fractionnement entre les deux phases successives ci-dessus, il peut être avantageux d'introduire la seconde partie du Composé II, sur le mélangeur externe, après une mise sur support afin de faciliter son incorporation et sa dispersion.

La composition finale ainsi obtenue est ensuite calandrée, par exemple sous la forme d'une feuille, d'une plaque ou encore extrudée, par exemple pour former un profilé de caoutchouc utilisé pour la fabrication de semi-finis tels que des bandes de roulement, des nappes d'armatures de sommet, des flancs, des nappes d'armatures de carcasse, des talons, des protecteurs, des chambres à air ou des gommes intérieures étanches pour pneu sans chambre.

La vulcanisation (ou cuisson) est conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

Le système de vulcanisation proprement dit est préférentiellement à base de soufre et d'un accélérateur primaire de vulcanisation, en particulier un accélérateur du type sulfénamide. A ce système de réticulation viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), d'éventuels agents anti-réversion, etc. Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique. L'accélérateur primaire de vulcanisation est utilisé à un taux préférentiel compris entre 0,5 et 10 pce, plus préférentiellement compris entre 0,5 et 5,0 pce en particulier lorsque l'invention s'applique à une bande de roulement de pneumatique.

L'invention concerne les compositions de caoutchouc précédemment décrites tant à l'état dit "cru" (i.e., avant cuisson) qu'à l'état dit "cuit" ou vulcanisé (i.e., après réticulation ou vulcanisation). Les compositions conformes à l'invention peuvent être utilisées seules ou en coupage (i.e., en mélange) avec toute autre composition de caoutchouc utilisable pour la fabrication de pneumatiques.

### III. EXEMPLES DE REALISATION DE L'INVENTION

### III-1. Synthèse du Composé II

Cet exemple illustre la préparation d'un azosilane particulier de formule (VI-j) :

(C₂H₅O)₃Si-(CH₂)₃-NH-CO-N=N-CO-O-C₂H₅

en deux étapes, comme suit :
- par réaction d'un silane isocyanate sur un éthyl carbazate pour formation d'un précurseur hydrazino, selon le schéma réactionnel suivant :

   (C₂H₅O)₃Si-(CH₂)₃-NCO + H₂N-NH-CO-O-C₂H₅ → (C₂H₅O)₃Si-(CH₂)₃-NH-CO-NH-NH-CO-O-C₂H₅
- puis oxydation du précurseur ci-dessus pour obtention du composé Ethyl-N-(3-triéthoxysilylpropyl)carbamoylazoformate.

### A) Synthèse de l'ingrédient précurseur :

### a) charges :

| | | |
|---|---|---|
| Isocyanatopropyltriéthoxysilane à 96% | 99,8 g | 384 mmol |
| Carbazate d'éthyle | 41,2 g | 384 mmol |
| Toluène Anhydre | 384 ml | - |

### b) protocole opératoire :

Le carbazate d'éthyle et le toluène anhydre sont chargés à température ambiante (23°C) dans le réacteur qui est mis sous atmosphère d'argon. Le réacteur est mis sous agitation à 300 tours/min et le mélange réactionnel est ensuite chauffé à 60°C. Le mélange réactionnel devient pratiquement homogène à chaud. Les 99,8 g de silane sont ensuite additionnés en 60 min à l'aide d'une ampoule de coulée isobare. Le mélange réactionnel est maintenu 2 heures sous agitation à 60°C avant retour à température ambiante. Le mélange réactionnel est laissé au repos quelques heures à température ambiante. Un solide blanc cristallise. Il est ensuite filtré, lavé par 2 fois 150 ml d'éther isopropylique puis essoré sous vide. Le solide est finalement mis à séché à l'étuve à 60°C jusqu'à poids constant égal à 131,5 g. Le produit est analysé par RMN (pureté molaire > 99%). Rendement = 97,4%.

### B) Synthèse du composé II (azosilane final) :

L'azosilane de formule (VI-j) est obtenu en une étape à partir du précurseur par oxydation de la fonction hydrazino en fonction azo utilisant un système oxydant à base de N-Bromosuccinimide (NBS) et de pyridine ajoutés en quantités stoechiométriques par rapport au précurseur.

### a) charges :

| | | |
|---|---|---|
| Précurseur | 20,0 g | 57 mmol |
| N-Bromosuccinimide 99% | 10,13 g | 57 mmol |
| Pyridine | 4,5 g | 57 mmol |
| Dichlorométhane | 100 ml | - |

### b) protocole opératoire :

Le précurseur, la pyridine et le dichlorométhane sont chargés dans un réacteur qui est mis sous atmosphère d'argon ; le milieu réactionnel est homogène pratiquement incolore. Le N-Bromosuccinimide est ajouté en 30 minutes à la spatule. La température est maintenue inférieure à 25°C. Dès le premier ajout de NBS, le milieu réactionnel devient orange vif. Le milieu réactionnel est maintenu sous agitation à température ambiante pendant 2 heures après la fin de l'addition du NBS. Le milieu réactionnel est concentré sous pression réduite à l'évaporateur rotatif.

Le résidu, qui se présente sous la forme d'une pâte orangée, est repris par 100 ml d'un mélange heptane/iPr₂O (1/1 : vol/vol) puis filtré sur verre fritté (125 ml) de porosité 4. Le gâteau de filtration est lavé par 4 fois 25 ml supplémentaires du mélange de solvant précédent. Les eaux-mères sont filtrées une seconde fois sur le gâteau. Le filtrat est concentré sous pression réduite. Un liquide orange vif inodore est obtenu : m = 18,8 g.

Ce liquide est analysé par RMN, sa composition molaire est la suivante (% en mole) :
- azosilane de formule VI-j : 94,5% ;
- composé précurseur : 0,2% ;
- succinimide : 5% ;
- résidus pyridiniques : 0,3%.

### III-2. Préparation des compositions de caoutchouc

On procède pour les essais qui suivent de la manière suivante: on introduit dans un mélangeur interne, rempli à 70% et dont la température initiale de cuve est d'environ 80°C, le caoutchouc naturel, la charge renforçante, son agent ou système de couplage s'il s'agit d'une charge inorganique, puis, après une à deux minutes de malaxage, les divers autres ingrédients à l'exception du système de vulcanisation. On conduit alors un travail thermomécanique (phase non-productive) en une étape (durée totale du malaxage égale à environ 4 min), jusqu'à atteindre une température maximale de "tombée" d'environ 160°C. On récupère le mélange ainsi obtenu, on le refroidit puis on ajoute le système de vulcanisation (soufre et accélérateur sulfénamide) sur un mélangeur externe (homo-finisseur) à 30°C, en mélangeant le tout (phase productive) pendant environ 5-6 min.

Pour la composition conforme à l'invention, le système de couplage est introduit comme suit : la totalité du Composant I et une partie (environ 1/3) du Composant II sont introduits pendant la phase non-productive (i.e., dans le mélangeur interne), tandis que le reste (soit environ 2/3) du Composant II est introduit pendant la phase productive (i.e., dans le mélangeur externe).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### III-3. Caractérisation des compositions de caoutchouc

Cet essai a pour but de démontrer les performances de couplage améliorées apportées par le système de couplage de l'invention, comparé à un agent de couplage conventionnel.

On prépare pour cela trois compositions à base de caoutchouc naturel renforcées de noir de carbone ou de silice HDS, ces trois compositions différant essentiellement par les caractéristiques techniques qui suivent :
- composition C-1 : charge noir de carbone (donc sans agent de couplage) ;
- composition C-2 : charge silice avec agent de couplage silane conventionnel ;
- composition C-3 : charge silice avec système de couplage selon l'invention.

Seule la composition C-3 est donc conforme à l'invention.

L'agent de couplage conventionnel de la composition témoin C-2 est le TESPT. On rappelle que le TESPT est le tétrasulfure de bis(3-triéthoxysilylpropyl), commercialisé notamment par la société Degussa sous la dénomination "Si69", de formule (Et = éthyle):

(EtO)₃Si-(CH₂)₃-S₄-(CH₂)₃-Si-(OEt)₃

ou, sous forme développée :

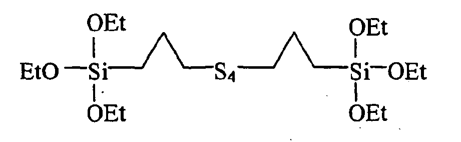

Dans la composition de l'invention C-3, le TESPT ci-dessus est remplacé par le système de couplage de l'invention comportant en combinaison :
- à titre d' agent de recouvrement, une huile polydiméthylsiloxane de formule (I-3) bloquée à chacune de ses deux extrémités par un motif diméthylhydroxysilyle ayant une viscosité de 50 mPa.s à 25°C ;
- et l'azosilane de formule (Et = éthyle) :

   (VI-j Et-O-CO-N=N-CO-NH-(CH₂)₃-Si(OEt)₃
ou, sous forme développée :

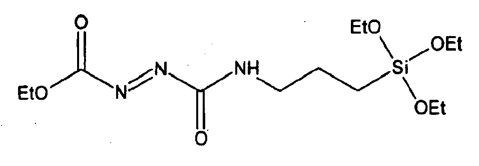

Les tableaux 1 et 2 donnent la formulation des différentes compositions (tableau 1 - taux des différents produits exprimés en pce - parties en poids pour cent parties d'élastomère) ainsi que leurs propriétés rhéométriques, et propriétés après cuisson (environ 20 min à 150°C) ; le système de vulcanisation est constitué par soufre et sulfénamide.

L'examen des différents résultats du tableau 2 montre tout d'abord, pour la composition conforme à l'invention C-3 comparée à la composition témoin C-2, une cinétique de vulcanisation beaucoup plus rapide, illustrée par une constante K de vitesse de conversion qui est nettement supérieure (multipliée par 2,0), ainsi que par un temps de cuisson (T₉₉-Ti) nettement réduit (divisé par 2,0).

Après cuisson, la composition C-3, toujours comparée à C-2, présente les valeurs les plus élevées de module sous forte déformation (M100 et M300) et de rapport M300/M100, indicateur clair pour l'homme du métier d'un meilleur renforcement apporté par le système de couplage nouveau.

Mais, enfin et surtout, la composition C-3 révèle de manière inattendue :
- non seulement, comparée à la composition témoin C-2 à base de silice, une hystérèse nettement améliorée, comme attesté par des valeurs de tan(δ)ₘₐₓ et ΔG* très sensiblement diminuées, ce qui est l'indicateur reconnu d'une réduction de la résistance au roulement des pneumatiques et par voie de conséquence de la consommation d'énergie des véhicules automobiles équipés de tels pneumatiques ;
- mais encore, comparée à la composition témoin C-1 renforcée de noir de carbone, un indice de renforcement M300/M100 supérieur, indicateur clair pour l'homme du métier d'une excellente aptitude à résister à l'usure.

Apparaissent ainsi "réconciliés" les deux objectifs contradictoires que sont résistance au roulement et résistance à l'usure, même dans des matrices d'élastomère isoprénique.

L'invention trouve des applications particulièrement avantageuses dans les compositions de caoutchouc destinées à la fabrication de bandes de roulement de pneumatiques à base d'élastomère isoprénique, en particulier lorsque ces bandes de roulement sont destinées à des pneumatiques pour véhicules industriels du type Poids-lourd.

**Tableau 1**

| Composition N°: | C-1 | C-2 | C-3 |
|---|---|---|---|
| NR (1) | 100 | 100 | 100 |
| noir de carbone (2) | 45 | - | - |
| noir de carbone N330 | - | 4 | 4 |
| silice (3) | - | 50 | 50 |
| silane (4) | - | 4 | - |
| silane (5) | - | - | 3.8 |
| agent de recouvrement (6) | - | - | 1.0 |
| ZnO | 3 | 3 | 3 |
| anti-oxydant (7) | 1.9 | 1.9 | 1.9 |
| acide stéarique | 2.5 | 2.5 | 2.5 |
| soufre | 1.5 | 1.5 | 1.5 |
| accélérateur (8) | 1.0 | 1.8 | 1.8 |

| | | | |
|---|---|---|---|
| (1) NR caoutchouc naturel peptisé ; (2) noir de carbone N234 (société Degussa) ; (3) silice "Zeosil 1165 MP" de la société Rhodia sous forme de microperles (BET et CTAB : environ 150-160 m²/g) (4) TESPT ("Si69" société Degussa) ; (5) azosilane (formule VI-j) ; (6) huile α,ω,-(dihydroxy)polyorganosiloxane ("Rhodorsil RP 110 ST" de Rhodia Chimie); (7) N-1,3-diméthylbutyl-N-phényl-para-phénylènediamine ("Santoflex 6-PPD" de la société Flexsys) ; (8) N-cyclohexyl-2-benzothiazyl-sulfénarnide ("Santocure CBS" de la société Flexsys). | | | |

**Tableau 2**

| Composition N° : | C-1 | C-2 | C-3 |
|---|---|---|---|
| *Propriétés avant cuisson:* | | | |
| Ti (min) | 5.5 | 7.9 | 9.5 |
| T₉₉ - Ti (min) | 11.7 | 17.6 | 8.9 |
| K(min⁻¹) | 0.395 | 0.261 | 0.517 |
| *Propriétés après cuisson:* | | | |
| M10 (MPa) | 4.64 | 5.11 | 4.50 |
| M100 (MPa) | 1.74 | 1.84 | 1.92 |
| M300 (MPa) | 2.10 | 1.81 | 2.47 |
| M300/M100 | 1.21 | 0.99 | 1.29 |
| tan(δ)ₘₐₓ | 0.171 | 0.147 | 0.108 |
| ΔG* | 2.30 | 1.97 | 0.83 |
| contrainte rupture (MPa) | 23 | 20 | 17 |
| allongement rupture (%) | 675 | 720 | 525 |

## Revendications

1. Pneumatique comportant une composition de caoutchouc à base d'au moins un élastomère isoprénique, une charge inorganique à titre de charge renforçante, un système de couplage (charge inorganique/ élastomère isoprénique) assurant la liaison entre la charge inorganique et l'élastomère isoprénique, **caractérisée en ce que** ledit système de couplage comporte :
■ un agent de recouvrement capable de se lier aux sites fonctionnels de surface de la charge inorganique choisi dans le groupe constitué par les silanes hydroxylés ou hydrolysables, les polyols, les polyéthers, les amines, les polysiloxanes hydroxylés ou hydrolysables, et les mélanges de tels composés (ci-après "Composé I") ; et
■ à titre d'agent de couplage, un composé organosilicié (ci-après "Composé II") au moins bifonctionnel greffable d'une part sur la charge inorganique au moyen d'un, groupe fonctionnel silylé G, d'autre part sur l'élastomère au moyen d'un groupe fonctionnel azo-dicarbonyle, ledit composé organosilicié ayant pour formule :
(II) A-CO-N=N-CO-Z-G
dans laquelle:
- G est le groupe fonctionnel silylé, porteur d'un groupe hydroxyle ou hydrolysable fixé sur un atome de silicium du composé ;
- Z est un groupe de liaison divalent reliant le groupe fonctionnel azo-dicarbonyle au groupe fonctionnel silylé ;
- A représente un groupe hydrocarboné monovalent ou le groupement de formule Z'-G' dans laquelle :
o Z', identique à ou différent de Z, est un groupe de liaison divalent permettant de relier le groupe fonctionnel azo-dicarbonyle à un autre groupe fonctionnel silylé G' ;
o G', identique à ou différent de G, est un groupe fonctionnel silylé porteur d'un autre groupe hydroxyle ou hydrolysable fixé sur un atome de silicium ;
- A, Z et le cas échéant Z' pouvant comporter, indépendamment, un hétéroatome.

2. Pneumatique selon la revendication 1, le Composé I étant choisi dans le groupe constitué par les silanes hydroxylés ou hydrolysables, les polysiloxanes hydroxylés ou hydrolysables, et les mélanges de tels composés.

3. Pneumatique selon la revendication 2, le Composé I étant une huile α,ω-(dihydroxy)-polyorganosiloxane.

4. Pneumatique selon l'une quelconque des revendications 1 à 3, le Composé II étant un organosilane.

5. Pneumatique selon la revendication 4, le Composé Il étant un organosilane de formule :
(III) A-CO-N=N-CO-Z-SiG¹₍₃₋ₐ₎G²₍ₐ₎
dans laquelle :
- a est un entier égal à 1, 2 ou 3 ;
- les radicaux G¹, substitués ou non substitués, identiques ou différents entre eux, sont choisis dans le groupe constitué par les alkyles en C₁-C₁₈, les cycloalkyles en C₅-C₁₈ et les aryles en C₆-C₁₈ ;
- les radicaux G², substitués ou non substitués, identiques ou différents entre eux, sont choisis dans le groupe constitué par l'hydroxyle, les alkoxyles en C₁-C₁₈ et les cycloalkoxyles en C₅-C₁₈.

6. Pneumatique selon la revendication 5, l'organosilane ayant pour formule :
(IV) G⁴_{(b)}G³_{(3-b)}Si-Z'-CO-N=N-CO-Z-SiG¹₍₃₋ₐ₎ G²₍ₐ₎
dans laquelle :
- b, identique à ou différent de a, est un entier égal à 1, 2 ou 3 ;
- G³ et G⁴, respectivement identiques à ou différents de G¹ et G², ont les mêmes définitions que celles données pour G¹ et G² ;
- Z', identique à ou différent de Z, a la même définition que Z.

7. Pneumatique selon la revendication 5, l'organosilane ayant pour formule :
(V) R-O-CO-N=N-CO-Z-SiG¹₍₃₋ₐ₎G²₍ₐ₎
dans laquelle R représente un alkyle en C₁-C₄.

8. Pneumatique selon la revendication 7, R représentant le méthyle ou l'éthyle.

9. Pneumatique selon l'une quelconque des revendications 5 à 8, Z et le cas échéant Z' étant un alkylène en C₁-C₁₀.

10. Pneumatique selon la revendication 9, l'alkylène comportant un hétéroatome choisi parmi O S et N.

11. Pneumatique selon la revendication 10, Z et le cas échéant Z' étant choisi dans le groupe constitué par -(CH₂)_{y}- ; -NH-(CH₂)_{y}- ; -O-(CH₂)_{y}- ; y étant un entier de 1 à 6.

12. Pneumatique selon les revendications 5 et 11, l'organosilane ayant pour formule ;
(VI) A-CO-N=N-CO-NH-(CH₂)_{y}-SiG¹₍₃₋ₐ₎G²₍ₐ₎

13. Pneumatique selon la revendication 12, A représentant R-O-, R représentant un alkyle en C₁-C₄, et y étant un entier de 1 à 4.

14. Pneumatique selon la revendication 13, R représentant le méthyle ou l'éthyle, et y étant égal à 3.

15. Pneumatique selon les revendications 6 et 11, l'organosilane ayant pour formule :
(VII) G⁴_{(b)}G³_{(3-b)}Si-(CH₂)_{y'}-HN-CO-N=N-CO-NH-(CH₂)_{y}-SiG¹₍₃₋ₐ₎G²₍ₐ₎

16. Pneumatique selon la revendication 15, y étant un entier de 1 à 4.

17. Pneumatique selon les revendications 5 et 11, l'organosilane ayant pour formule :
(VIII) A-CO-N=N-CO-O-(CH₂)_{y}-SiG¹₍₃₋ₐ₎G²₍ₐ₎

18. Pneumatique selon la revendication 17, y étant un entier de 1 à 4, A représentant R-O-, R représentant un alkyle en C₁-C₄, et y étant un entier de 1 à 4.

19. Pneumatique selon la revendication 18, R représentant le méthyle ou l'éthyle, et y étant égal à 3.

20. Pneumatique selon les revendications 6 et 11, l'organosilane ayant pour formule :
(IX) G⁴_{(b)}G³_{(3-b)}Si-(CH₂)_{y'}-O-CO-N=N-CO-O-(CH₂)_{y}-SiG¹₍₃₋ₐ₎G²₍ₐ₎

21. Pneumatique selon la revendication 20, y et y' étant chacun un entier de 1 à 4.

22. Pneumatique selon l'une quelconque des revendications 5 à 21, dans laquelle :
- les radicaux G¹ et le cas échéant G³ sont choisis parmi les alkyles en C₁-C₄
- les radicaux. G² et le cas échéant G⁴ sont choisis parmi l'hydroxyle et les alkoxyles en C₁₋C₄.

23. Pneumatique selon l'une quelconque des revendications 1 à 4, le Composé II étant un organosiloxane de formule :
(X) [(G⁰)₃SiO_{1/2}]ₘ [(G⁰)₂SiO_{2/2}]ₙ [G⁰SiO_{3/2}]ₒ [SiO_{4/2}]ₚ [(G²)_{c}(G¹)_{c'}(A-CO-N=N-CO-Z)SiO_{(3-c-c')/2}]_{q}
dans laquelle :
- les radicaux G¹, substitués ou non substitués, identiques ou différents entre eux, sont choisis dans le groupe constitué par les alkyles en C₁-C₁₈, les cycloalkyles en C₅-C₁₈ et les aryles en C₆-C₁₈ ;
- les radicaux G², substitués ou non substitués, identiques ou différents entre eux, sont choisis dans le groupe constitué par l'hydroxyle, les alkoxyles en C₁₋C₁₈ et les cycloalkoxyles en C₅-C₁₈;
- les symboles G⁰, identiques ou différents, représentent chacun l'un des groupes correspondant à G² ou G¹ ;
- c représente un nombre entier choisi parmi 0, 1 et 2;
- c' représente un nombre entier choisi parmi 0, 1 et 2;
- m, n, o, p représentent chacun un nombre entier ou fractionnaire égal ou supérieur à 0;
- q représente un nombre entier ou fractionnaire égal ou supérieur à 1 ;
- la somme c+c' se situe dans l'intervalle allant de 0 à 2 avec la condition selon laquelle quand c = 0, alors au moins un symbole G⁰ répond à la définition de G² ; et
o soit au moins un des m, n, o, p est un nombre entier ou fractionnaire différent de 0 (zéro) et q représente un nombre entier ou fractionnaire égal ou supérieur à 1;
o soit q est supérieur à 1 et alors chacun des m, n, o, p a une valeur quelconque.

24. Pneumatique selon la revendication 23, dans lequel :
- les radicaux G¹ sont choisis parmi les alkyles en C₁-C₄ ;
- les radicaux G² sont choisis parmi l'hydroxyle et les alkoxyles en C₁-C_{4.}

25. Pneumatique selon la revendication 23 ou 24, Z et le cas échéant Z' étant un alkylène en C₁-C₁₀.

26. Pneumatique selon la revendication 25, l'alkylène comportant un hétéroatome choisi parmi O, S et N.

27. Pneumatique selon la revendication 26, Z et le cas échéant Z' étant choisi dans le groupe constitué par -(CH₂)_{y}- ; -NH-(CH₂)_{y}- ; -O-(CH₂)_{y}- ; y étant un entier de 1 à 6.

28. Pneumatique **caractérisé en ce que** sa bande de roulement comporte une composition selon l'une quelconque des revendications 1 à 27.

## Claims

1. Tyre comprising a rubber composition based on at least one isoprene elastomer, an inorganic filler as reinforcing filler and an (inorganic filler/isoprene elastomer) coupling system which provides the bonding between the inorganic filler and the isoprene elastomer, **characterized in that** the said coupling system comprises:
■ a covering agent capable of bonding to the surface functional sites of the inorganic filler chosen from the group consisting of hydroxylated or hydrolysable silanes, polyols, polyethers, amines, hydroxylated or hydrolysable polysiloxanes, and the mixtures of such compounds (hereinafter "Compound I"); and
■ as coupling agent, an at least bifunctional organosilicon compound (hereinafter "Compound II") which can be grafted, on the one hand, to the inorganic filler by means of a silyl functional group G and, on the other hand, to the elastomer by means of an azodicarbonyl functional group, the said organosilicon compound having the formula:
A-CO-N=N-CO-Z-G (II)
in which:
- G is the silyl functional group bearing a hydroxyl or hydrolysable group attached to a silicon atom of the compound;
- Z is a divalent bonding group connecting the azodicarbonyl functional group to the silyl functional group;
- A represents a monovalent hydrocarbon group or the group of formula Z'-G' in which:
o Z', which is identical to or different from Z, is a divalent bonding group which makes it possible to connect the azodicarbonyl functional group to another silyl functional group G';
o G', which is identical to or different from G, is a silyl functional group bearing another hydroxyl or hydrolysable group attached to a silicon atom;
- A, Z and if applicable Z', independently, may comprise a heteroatom..

2. Tyre according to Claim 1, Compound I being chosen from the group consisting of hydroxylated or hydrolysable silanes, hydroxylated or hydrolysable polysiloxanes, and the mixtures of such compounds.

3. Tyre according to Claim 2, Compound I being an α,ω-(dihydroxy)-polyorganosiloxane oil.

4. Tyre according to any one of Claims 1 to 3, Compound II being an organosilane.

5. Tyre according to Claim 4, Compound II being an organosilane of formula:
A-CO-N=N-CO-Z-SiG¹₍₃₋ₐ₎G²₍ₐ₎ (III)
in which:
- a is an integer equal to 1, 2 or 3;
- the G¹ radicals, which are substituted or unsubstituted and which are identical to or different from one another, are chosen from the group consisting of C₁-C₁₈ alkyls, C₅-C₁₈ cycloalkyls and C₆-C₁₈ aryls;
- the G² radicals, which are substituted or unsubstituted and which are identical to or different from one another, are chosen from the group consisting of hydroxyl, C₁-C₁₈ alkoxyls and C₅-C₁₈ cycloalkoxyls.

6. Tyre according to Claim 5, the organosilane having the formula:
G⁴_{(b)}G³_{(3-b)}Si-Z'-CO-N=N-CO-Z-SiG¹₍₃₋ₐ₎G²₍ₐ₎ (IV)
in which:
- b, which is identical to or different from a, is an integer equal to 1, 2 or 3;
- G³ and G⁴, which are respectively identical to or different from G¹ and G², have the same definitions as those given for G¹ and G²;
- Z', which is identical to or different from Z, has the same definition as Z.

7. Tyre according to Claim 5, the organosilane having the formula:
R-O-CO-N=N-CO-Z-SiG¹₍₃₋ₐ₎G²₍ₐ₎ (V)
in which R represents a C₁-C₄ alkyl.

8. Tyre according to Claim 7, R representing methyl or ethyl.

9. Tyre Composition according to any one of Claims 5 to 8, Z and, if applicable, Z' being a C₁-C₁₀ alkylene.

10. Tyre according to Claim 9, the alkylene comprising a heteroatom chosen from O, S and N.

11. Tyre according to Claim 10, Z and, if applicable, Z' being chosen from the group consisting of -(CH₂)_{y}-, -NH-(CH₂)_{y}- and -O-(CH₂)_{y}-, y being an integer from 1 to 6.

12. Tyre according to Claims 5 and 11, the organosilane having the formula:
A-CO-N=N-CO-NH-(CH₂)_{y}-SiG¹₍₃₋ₐ₎G²₍ₐ₎ (VI)

13. Tyre according to Claim 12, A representing R-O-, R representing a C₁-C₄ alkyl and y being an integer from 1 to 4.

14. Tyre according to Claim 13, R representing methyl or ethyl and y being equal to 3.

15. Tyre according to Claims 6 and 11, the organosilane having the formula:
G⁴_{(b)}G³_{(3-b)}Si-(CH₂)_{y'}-HN-CO-N=N-CO-NH-(CH₂)_{y}-SiG¹₍₃₋ₐ₎G²₍ₐ₎ (VII)

16. Tyre according to Claim 15, y being an integer from 1 to 4.

17. Tyre according to Claims 5 and 11, the organosilane having the formula:
A-CO-N=N-CO-O-(CH₂)_{y}-SiG¹₍₃₋ₐ₎G²₍ₐ₎ (VIII)

18. Tyre according to Claim 17, y being an integer from 1 to 4, A representing R-O-, R representing a C₁-C₄ alkyl and y being an integer from 1 to 4.

19. Tyre according to Claim 18, R representing methyl or ethyl and y being equal to 3.

20. Tyre according to Claims 6 and 11, the organosilane having the formula:
G⁴_{(b)}G³_{(3-b)}Si-(CH₂)_{y'}-O-CO-N=N-CO-O-(CH₂)_{y}-SiG¹₍₃₋ₐ₎G²₍ₐ₎ (IX)

21. Tyre according to Claim 20, y and y' each being an integer from 1 to 4.

22. Tyre according to any one of Claims 5 to 21, in which:
- the radicals G¹ and, if applicable, G³ are chosen from C₁-C₄ alkyls;
- the radicals G² and, if applicable, G⁴ are chosen from hydroxyl and C₁-C₄ alkoxyls.

23. Tyre according to any one of Claims 1 to 4, Compound II being an organosiloxane of formula:
[(G⁰)₃SiO_{1/2}]ₘ [(G⁰)₂SiO_{2/2}]ₙ [G⁰SiO_{3/2}]ₒ [SiO_{4/2}]ₚ [(G²)_{c}(G¹)_{c'}(A-CO-N=N-CO-Z)SiO_{(3-c-c')/2}]_{q} (X)
in which:
- the G¹ radicals, which are substituted or unsubstituted and which are identical to or different from one another, are chosen from the group consisting of C₁-C₁₈ alkyls, C₅-C₁₈ cycloalkyls and C₆-C₁₈ aryls;
- the G² radicals, which are substituted or unsubstituted and which are identical to or different from one another, are chosen from the group consisting of hydroxyl, C₁-C₁₈ alkoxyls and C₅-C₁₈ cycloalkoxyls;
- the G⁰ symbols, which are identical or different, each represent one of the groups corresponding to G² or G¹;
- c represents an integer chosen from 0, 1 and 2;
- c' represents an integer chosen from 0, 1 and 2;
- m, n, o and p each represent a whole or fractional number equal to or greater than 0;
- q represents a whole or fractional number equal to or greater than 1;
- the sum c+c' lies within the range from 0 to 2, with the condition according to which, when c = 0, then at least one G⁰ symbol corresponds to the definition of G²; and
o either at least one of m, n, o and p is a whole or fractional number other than 0 (zero) and q represents a whole or fractional number equal to or greater than 1;
o or q is greater than 1 and then each of m, n, o and p has any value.

24. Tyre according to Claim 23, in which:
- the G¹ radicals are chosen from C₁-C₄ alkyls;
- the G² radicals are chosen from hydroxyl and C₁-C₄ alkoxyls.

25. Tyre according to Claim 23 or 24, Z and, if applicable, Z' being a C₁-C₁₀ alkylene.

26. Tyre according to Claim 25, the alkylene comprising a heteroatom chosen from O, S and N.

27. Tyre according to Claim 26, Z and, if applicable, Z' being chosen from the group consisting of -(CH₂)_{y}-, -NH-(CH₂)_{y}- and -O-(CH₂)_{y}-, y being an integer from 1 to 6.

28. Tyre **characterized in that** its tread comprises a rubber composition according to any one of Claims 1 to 27.

## Patentansprüche

1. Reifen, umfassend eine Kautschukzusammensetzung auf Basis mindestens eines Isoprenelastomers und eines anorganischen Füllstoffs als verstärkender Füllstoff, eines Kupplungssystems für anorganischen Füllstoff und Isoprenelastomer, das die Bindung zwischen dem anorganischen Füllstoff und dem Isoprenelastomer gewährleistet, **dadurch gekennzeichnet, daß** das Kupplungssystem:
■ ein Beschichtungsmittel, das zur Bindung an die funktionellen Stellen an der Oberfläche des anorganischen Füllstoffs befähigt ist und aus der Gruppe bestehend aus hydroxylgruppenhaltigen oder hydrolysierbaren Silanen, Polyolen, Polyethern, Aminen, hydroxylgruppenhaltigen oder hydrolysierbaren Polysiloxanen und Mischungen derartiger Verbindungen ausgewählt ist (im folgenden "Verbindung I); und
■ als Kupplungsmittel eine mindestens bifunktionelle siliciumorganische Verbindung (im folgenden "Verbindung II"), die zum einen über eine silylfunktionelle Gruppe G auf den anorganischen Füllstoff und zum anderen über eine azodicarbonylfunktionelle Gruppe auf das Elastomer aufgepfropft werden kann, wobei die siliciumorganische Verbindung die Formel:
(II) A- CO - N = N - CO - Z - G
aufweist, worin:
- G für die silylfunktionelle Gruppe, die eines an ein Siliciumatom der Verbindung gebundene Hydroxylgruppe oder hydrolysierbare Gruppe trägt, steht;
- Z für eine zweiwertige Verbindungsgruppe, die die azodicarbonylfunktionelle Gruppe mit der silylfunktionellen Gruppe verbindet, steht;
- A für eine einwertige Kohlenwasserstoffgruppe oder die Gruppe der Formel Z'-G', worin:
o Z' mit Z identisch oder von Z verschieden ist und eine zweiwertige Verbindungsgruppe, die die Verbindung der azodicarbonylfunktionellen Gruppe mit einer anderen silylfunktionellen Gruppe G' ermöglicht, bedeutet;
o G' mit G identisch oder von G verschieden ist und eine silylfunktionelle Gruppe, die eine andere an ein Siliciumatom der Verbindung gebundene Hydroxylgruppe oder hydrolysierbare Gruppe trägt, bedeutet;
steht;
- wobei A, Z und gegebenenfalls Z' unabhängig voneinander ein Heteroatom enthalten können;
umfaßt.

2. Reifen nach Anspruch 1, wobei die Verbindung I aus der Gruppe bestehend aus hydroxylgruppenhaltigen oder hydrosylierbaren Silanen, hydroxylgruppenhaltigen oder hydrosylierbaren Polysiloxanen und Mischungen derartiger Verbindungen ausgewählt ist.

3. Reifen nach Anspruch 2, wobei es sich bei der Verbindung I um ein α,ω-(Dihydroxy)polyorganosiloxanöl handelt.

4. Reifen nach einem der Ansprüche 1 bis 3, wobei es sich bei der Verbindung II um ein Organosilan handelt.

5. Reifen nach Anspruch 4, wobei es sich bei der Verbindung II um ein Organosilan der Formel:
A - CO - N = N - CO - Z - Si G¹₍₃₋ₐ₎ G²₍ₐ₎ (III)
handelt, worin:
- a für eine ganze Zahl mit einem Wert von 1, 2 oder 3 steht;
- die Reste G¹ substituiert oder unsubstituiert und gleich oder voneinander verschieden sind und aus der Gruppe bestehend aus C₁-C₁₈-Alkylgruppen, C₅-C₁₈-Cycloalkylgruppen und C₆-C₁₈-Arylgruppen ausgewählt sind;
- die Reste G² substituiert oder unsubstituiert und gleich oder voneinander verschieden sind und aus der Gruppe bestehend aus Hydroxyl, C₁-C₁₈-Alkoxylgruppen und C₅-C₁₈-Cycloalkoxylgruppen ausgewählt sind.

6. Reifen nach Anspruch 5, wobei das Organosilan die Formel:
(IV) G⁴_{(b)} G³_{(3-b)} Si - Z' - CO - N = N - CO - Z - Si G¹₍₃₋ₐ₎ G²₍ₐ₎
aufweist, worin:
- b mit a identisch oder von a verschieden ist und für eine ganze Zahl mit einem Wert von 1, 2 oder 3 steht;
- G³ und G⁴ jeweils mit G¹ und G² identisch oder von G¹ und G² verschieden sein können und die gleichen Definitionen wie für G¹ und G² aufweisen;
- Z' mit Z identisch oder von Z verschieden ist und die gleiche Definition wie Z aufweist.

7. Reifen nach Anspruch 5, wobei das Organosilan die Formel:
(V) R - O - CO - N = N - CO - Z - Si G¹₍₃₋ₐ₎ G²₍ₐ₎
aufweist, worin R für eine C₁-C₄-Alkylgruppe steht.

8. Reifen nach Anspruch 7, wobei R für Methyl oder Ethyl steht.

9. Reifen nach einem der Ansprüche 5 bis 8, wobei Z und gegebenenfalls Z' für eine C₁-C₁₀-Alkylengruppe stehen.

10. Reifen nach Anspruch 9, wobei das Alkylen ein unter O, S und N ausgewähltes Heteroatom enthält.

11. Reifen nach Anspruch 10, wobei Z und gegebenenfalls Z' aus der Gruppe bestehend aus -(CH₂)_{y}-, -NH-(CH₂)_{y}- und -O-(CH₂)_{y}-, wobei y für eine ganze Zahl von 1 bis 6 steht, ausgewählt ist.

12. Reifen nach den Ansprüchen 5 und 11, wobei das Organosilan die Formel:
(VI) A - CO - N = N - CO - NH - (CH₂)_{y} - Si G¹₍₃₋ₐ₎ G²₍ₐ₎
aufweist.

13. Reifen nach Anspruch 12, wobei A für R-O-, wobei R eine C₁-C₄-Alkylgruppe bedeutet, steht und y für eine ganze Zahl von 1 bis 4 steht.

14. Reifen nach Anspruch 13, wobei R für Methyl oder Ethyl steht und y gleich 3 ist.

15. Reifen nach den Ansprüchen 6 und 11, wobei das Organosilan die Formel:
(VII) G⁴_{(b)} G³_{(3-b)} Si - (CH₂)_{y'} - HN - CO - N = N - CO - NH - (CH₂)_{y} - Si G¹₍₃₋ₐ₎ G²₍ₐ₎
aufweist.

16. Reifen nach Anspruch 15, wobei y für eine ganze Zahl von 1 bis 4 steht.

17. Reifen nach den Ansprüchen 5 und 11, wobei das Organosilan die Formel:
(VIII) A - CO - N = N - CO - O - (CH₂)_{y} - Si G¹₍₃₋ₐ₎ G²₍ₐ₎
aufweist.

18. Reifen nach Anspruch 17, wobei y für eine ganze Zahl von 1 bis 4 steht, A für R-O-, wobei R eine C₁-C₄-Alkylgruppe bedeutet, steht und y für eine ganze Zahl von 1 bis 4 steht.

19. Reifen nach Anspruch 18, wobei R für Methyl oder Ethyl steht und y gleich 3 ist.

20. Reifen nach den Ansprüchen 6 und 11, wobei das Organosilan die Formel:
(IX) G⁴_{(b)} G³_{(3-b)} Si - (CH₂)_{y'} - O - CO - N = N - CO - O - (CH₂)_{y} - Si G¹₍₃₋ₐ₎ G²₍ₐ₎
aufweist.

21. Reifen nach Anspruch 20, wobei y und y' jeweils für eine ganze Zahl von 1 bis 4 stehen.

22. Reifen nach einem der Ansprüche 5 bis 21, worin:
- die Reste G¹ und gegebenenfalls G³ unter C₁-C₄-Alkylgruppen ausgewählt sind;
- die Reste G² und gegebenenfalls G⁴ unter Hydroxyl und C₁-C₄-Alkoxygruppen ausgewählt sind.

23. Reifen nach einem der Ansprüche 1 bis 4, wobei es sich bei der Verbindung der Formel II um ein Organosiloxan der Formel:
(X) [(G⁰)₃SiO_{1/2}]ₘ [(G⁰)₂SiO_{2/2}]ₙ [G⁰SiO_{3/2}]ₒ [SiO_{4/2}]ₚ [(G²)_{c}(G¹)_{c'}(A-CO-N=N-CO-Z)SiO_{(3-c-c')/2}]_{q}
handelt, worin:
- die Reste G¹ substituiert oder unsubstituiert und gleich oder voneinander verschieden sind und aus der Gruppe bestehend aus C₁-C₁₈-Alkylgruppen, C₅-C₁₈-Cycloalkylgruppen und C₆-C₁₈-Arylgruppen ausgewählt sind;
- die Reste G² substituiert oder unsubstituiert und gleich oder voneinander verschieden sind und aus der Gruppe bestehend aus Hydroxyl, C₁-C₁₈-Alkoxylgruppen und C₅-C₁₈-Cycloalkoxylgruppen ausgewählt sind;
- die Symbole G⁰ gleich oder verschieden sind und jeweils für eine den Gruppen G² oder G¹ entsprechende Gruppe stehen;
- c für eine ganze Zahl, die unter 0, 1 und 2 ausgewählt ist, steht;
- c' für eine ganze Zahl, die unter 0, 1 und 2 ausgewählt ist, steht;
- m, n, o und p jeweils für eine ganze oder gebrochene Zahl größer gleich 0 stehen;
- q für eine ganze oder gebrochene Zahl größer gleich 1 steht;
- die Summe c+c' im Bereich von 0 bis 2 liegt, mit der Maßgabe, daß im Fall von c = 0 mindestens ein Symbol G⁰ der Definition von G² entspricht; und
o entweder mindestens eine der Variablen m, n, o und p für eine ganze oder gebrochene Zahl, die von 0 verschieden ist, steht und q für eine ganze oder gebrochene Zahl größer gleich 1 steht
o oder q größer als 1 ist und dann jede der Variablen m, n, o und p einen beliebigen Wert hat.

24. Reifen nach Anspruch 23, worin:
- die Reste G¹ unter C₁-C₄-Alkylgruppen ausgewählt sind;
- die Reste G² unter Hydroxyl und C₁-C₄-Alkoxylgruppen ausgewählt sind.

25. Reifen nach Anspruch 23 oder 24, wobei Z' und gegebenenfalls Z' für ein C₁-C₁₀-Alkylen steht.

26. Reifen nach Anspruch 25, wobei das Alkylen ein unter O, S und N ausgewähltes Heteroatom enthält.

27. Reifen nach Anspruch 26, wobei Z und gegebenenfalls Z' aus der Gruppe bestehend aus -(CH₂)_{y}-, -NH-(CH₂)_{y}- und -O-(CH₂)_{y}-, wobei y für eine ganze Zahl von 1 bis 6 steht, ausgewählt ist.

28. Reifen, **dadurch gekennzeichnet, daß** seine Lauffläche eine Zusammensetzung nach einem der Ansprüche 1 bis 27 umfaßt.
